(19) Europäisches Patentamt
European Patent Office
Office européen des brevets

(11) EP 1 705 195 A1

(12) EUROPEAN PATENT APPLICATION
published in accordance with Art. 158(3) EPC

(43) Date of publication:
**27.09.2006 Bulletin 2006/39**

(21) Application number: **04819867.5**

(22) Date of filing: **01.12.2004**

(51) Int Cl.:
***C08F 8/48*** (2006.01) ***C08F 212/08*** (2006.01)
***C08F 220/10*** (2006.01) ***C08F 265/06*** (2006.01)
***G02B 5/30*** (2006.01)

(86) International application number:
**PCT/JP2004/017878**

(87) International publication number:
**WO 2005/054311 (16.06.2005 Gazette 2005/24)**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **02.12.2003 JP 2003403853**
**02.12.2003 JP 2003403854**
**03.12.2003 JP 2003403901**
**03.12.2003 JP 2003403909**
**03.12.2003 JP 2003403916**
**03.12.2003 JP 2003403933**
**03.12.2003 JP 2003403935**
**21.09.2004 JP 2004273472**

(71) Applicant: **KANEKA CORPORATION**
**Osaka-shi, Osaka 530-8288 (JP)**

(72) Inventors:
- **KAWABATA, Hirosuke c/o Osaka Factory of KANEKA COR**
**Osaka 566-0072 (JP)**
- **HIIRO, Tomoki c/o Osaka Factory of KANEKA CORP.**
**Osaka 566-0072 (JP)**
- **SEKIGUCHI, Yasuhiro c/o Osaka Factory of KANEKA CO**
**Osaka 566-0072 (JP)**
- **WADA, Kazuhito c/o Osaka Factory of KANEKA CORP.**
**Osaka 566-0072 (JP)**
- **NISHIMURA, Kimihide c/o Osaka Factory of KANEKA CO**
**Osaka 566-0072 (JP)**
- **DOI, Norito c/o Osaka Factory of KANEKA CORP.**
**Osaka 566-0072 (JP)**

(74) Representative: **Behnisch, Werner**
**Reinhard-Skuhra-Weise & Partner GbR,**
**Friedrichstrasse 31**
**80801 München (DE)**

# (54) IMIDE RESIN, AND PRODUCTION METHOD AND USE THEREOF

(57) To realize an imide resin which is favorable in optical use.

The imide resin according to the present invention includes: a repeating unit represented by General Formula (1); a repeating unit represented by General Formula (2); and a repeating unit represented by General Formula (3), wherein an orientation birefringence of the imide resin ranges from $-0.1\times10^{-3}$ to $0.1\times10^{-3}$,

General Formula (1)

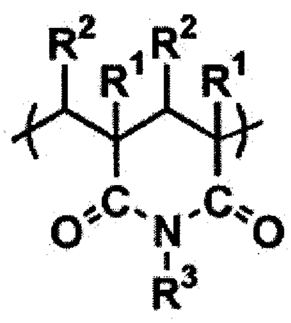

・・・(1)

EP 1 705 195 A1

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

General Formula (2)

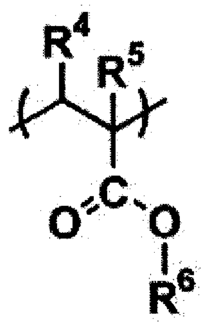

... (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

General Formula (3)

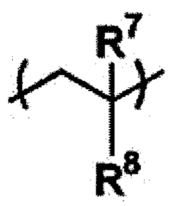

... (3)

where $R^7$ represents a hydrogen atom or an alkyl group having 1 to 8 carbon atoms, and $R^8$ represents an aryl group having 6 to 10 carbon atoms.

## Description

### TECHNICAL FIELD

The present invention relates to (i) an imide resin, having high transparency and excellent heat resistance, which is favorably used for optical purpose, (ii) a production method of the imide resin, and (iii) usage of the imide resin.

### BACKGROUND ART

Recently, sizes of electronic devices have been decreasing. As represented by a lap top personal computer, a mobile phone, a personal digital assistant, and the like, these electronic devices have been used for various purposes due to the light weights and the small sizes. While, in a field of a flat panel display such as a liquid crystal display, a plasma display, and the like, a larger screen is required not to have a heavier weight accordingly.

In devices required to have transparency as in the aforementioned electronic devices, a member conventionally made of glass has been being replaced with a highly transparent resin.

Various transparent resins represented by poly(methyl methacrylate) are characterized by: more favorable formability and processability than glass; splinterless; a lighter weight; inexpensive price; and the like. Due to these characteristics, application of the transparent materials to a liquid crystal display, an optical disc, a pickup lens, and the like has been being studied. Partially, these transparent materials have been practically used.

With application to an automobile head lamp cover, a liquid crystal display member, and the like, each transparent resin is required to have not only the transparency but also heat resistance. Poly(methyl methacrylate) and polystylene are characterized by favorable transparency and relatively inexpensive price, but each of the resins has low heat resistance, so that such application of the resins is limited.

As one of methods for improving the heat resistance of poly(methyl methacrylate), a method in which methyl methacrylate and cyclohexyl maleimide are copolymerized with each other has been practically adopted. However, according to the method, cyclohexyl maleimide which is an expensive monomer is used, so that it takes more cost to obtain a copolymer having higher heat resistance.

While, there is proposed an arrangement in which an acrylic resin is treated with primary amine in an extruder so that a methyl ester group is imidized so as to obtain an imide resin (USP 4,246,374, USP 4,727,117, USP 4,954,574, USP 5,004,777, and USP 5,264,483). Further, also an example where a methyl methacrylate-styrene copolymer is used as an acrylic resin is reported. It is recited that each of these resins has favorable transparency and heat resistance.

However, the resin obtained in accordance with these methods is extremely brittle, so that the resin is inferior in the secondary processability (anti-bending property).

Thus, a thermoplastic resin which is excellent in the secondary processability (anti-bending property), the transparency, and the heat resistance, has been desired.

Further, each of these conventional arts does not have clear recitation concerning any characteristic of imidized methyl methacrylate-styrene copolymer. Particularly, these conventional arts are totally silent about orientation birefringence.

Generally, polymer chains of a polymer are aligned at the time of extrusion formation or the like, so that this often results in double refraction. Each of polycarbonate and a cyclic olefin copolymer frequently used as a transparent resin has positive double refraction. While, each of polystyrene and methyl methacrylate has negative double refraction. The double refraction is severely influenced by a primary structure of a polymer. It is difficult to control the double refraction of the polymer, so that it is not easy to select appropriate double refraction according to a purpose of use.

Thus, an inexpensive thermoplastic resin, having excellent transparency and heat resistance, whose orientation birefringence can be controlled, has been desired.

Incidentally, examples of usage of the thermoplastic resin include a polarizer-protective film of a linear polarization plate, a retardation film, and the like.

The linear polarization plate is a material which allows transmission of only linearly polarized light, having a specific oscillation direction, out of passing light, and which shields other linearly polarized light. The linear polarization plate is widely used as a part constituting a liquid crystal display device for example. Generally, a material in which a polarization film and a polarizer-protective film are laminated is used as the linear polarization plate.

The polarization film is a film which allows transmission of only linearly polarized light having a specific oscillation direction. Generally, a film obtained by extending a polyvinylalcohol (hereinafter, referred to as PVA) film or the like and by coloring the drawn film with iodine, dichroic dye, or the like, is used.

The polarizer-protective film gives practical strength to the whole polarization plate by holding the polarization film. For example, a triacetylcellulose (hereinafter, referred to as TAC) film or the like is generally used as the polarizer-protective film.

It is not preferable to use a film having an unnecessary phase difference as the polarizer-protective film. This

is because: even if the polarization film has a highly accurate linear polarization function, a phase difference deviation or light axis deviation of the polarizer-protective film gives an elliptical polarization property to linearly polarized light passing through the polarization film. Also the phase difference of the TAC film is basically small. However, the TAC film is a film which is likely to have a phase difference due to an external stress. Thus, particularly, a large-size liquid crystal display device has such a problem that a peripheral portion of the film has lower contrast or a similar problem. In this view point, a film material whose photoelastic coefficient is smaller than that of the TAC film is used as the polarizer-protective film by way of experiment.

An example thereof (e.g., Japanese Unexamined Patent Publication No. 77608/1995 (Tokukaihei 7-77608)) is a protective film whose moisture permeability at 80°C and 90 %RH is 20 g·mm/m$^2$·24 hr or less and photoelastic coefficient is $1\times10^{-11}$ cm$^2$/dyne or less.

While, in a liquid crystal display, the retardation film is a double refraction film used to change a relative phase of a polarized light component. In order to obtain a clear and fine image in the liquid crystal display, it is required that an entire surface of the double refraction layer is optically even and its optical property is not changed by an environmental change such as a temperature change, a humidity change, and the like.

As the retardation film, a film obtained by drawing a polymer film such as polyvinylalcohol, triacetylcellulose, polycarbonate, and the like is conventionally used. However, each of these materials has a large photoelastic coefficient, so that even a small stress changes its phase difference. Thus, the material is inferior in optical evenness. Further, the heat resistance and the humidity resistance of the material are not necessarily sufficient. Particularly, in case where the material is used in a liquid crystal display provided in an automobile, it is expected that the material is used under a harsh condition, so that improvement of the material has been required.

Recently, as a transparent resin material, there have been proposed (i) a cyclic olefin homopolymer (or a hydrogenated cyclic olefin homopolymer), (ii) a cyclic olefin copolymer (or a hydrogenated cyclic olefin copolymer) obtained by copolymerizing a cyclic olefin with olefin other than the cyclic olefin, (iii) and the like.

Each of these materials has properties such as a low double refraction property, a lower moisture absorption property, heat resistance, and the like, so that the material is being developed as an optical material. It is reported that: each of the materials has a relatively small photoelastic coefficient, so that its optical property is hardly changed by the environmental change. For example, Japanese Patent Publication No. 3220478 discloses a liquid crystal display phase plate using a thermoplastic saturated norbornane resin sheet.

However, such a cyclic olefin polymer generally requires a complicate route in its synthesis, so that its price is high. Furthermore, the cyclic olefin polymer has such a problem that its solubility in solvent is low. In case of making the polymer into a film, an extrusion method is adopted, but its surface property drops unlike a solvent casting method, so that the extrusion method is hard to apply to a field which requires a high surface property.

A resin having a glutarimide structural unit has high transparency and high heat resistance, and its photoelastic coefficient is small, so that application thereof as an optical material is studied. For example, Japanese Unexamined Patent Publication No. 256537/1994 (Tokukaihei 6-256537) discloses an optical film made of glutarimide acrylate resin. Further, Japanese Unexamined Patent Publication No. 11615/1994 (Tokukaihei 6-11615) discloses a phase difference plate made of glutarimide acrylate resin. However, in case where the glutarimide acrylate resin is made into a film, its strength is low.

Thus, it is required to produce (i) a polarizer-protective film, capable of being easily produced, which has excellent heat resistance, excellent strength, excellent moisture permeability, and a sufficiently small photoelastic coefficient, and (ii) a retardation film, capable of being easily produced, which has excellent transparency, excellent heat resistance, excellent mechanical property, and even phase difference.

The present invention was made in view of the foregoing problems, and an object of the present invention is to realize an imide resin which is favorable in an optical use.

(Patent Document 1)
USP No. 4,246,374 (Issued date: January 20, 1981)
(Patent Document 2)
USP No. 4,727,117 (Issued date: February 23, 1988)
(Patent Document 3)
USP No. 4,954,574 (Issued date: February 23, 1988)
(Patent Document 4)
USP No. 5,004,777 (Issued date: April 2, 1991)
(Patent Document 5)
USP No. 5,264,483 (Issued date: November 23, 1993)
(Patent Document 6)
Japanese Unexamined Patent Publication No. 77608/1995 (Tokukaihei 7-77608)(Publication date: March 20, 1995)
(Patent Document 7)

Japanese Patent Publication No. 3220478 (corresponding to Japanese Unexamined Patent Publication No. 361230/1992 (Tokukaihei 4-361230)(Publication date: December 14, 1992)
(Patent Document 8)
Japanese Unexamined Patent Publication No. 256537/1994 (Tokukaihei 6-256537)(Publication date: September 13, 1994)
(Patent Document 9)
Japanese Unexamined Patent Publication No. 11615/1994 (Tokukaihei 6-11615)(Publication date: January 21, 1994)
(Patent Document 10)
USP No. 3,284,425 (Issued date: November 8, 1996)
(Patent Document 11)
Japanese Unexamined Patent Publication No. 153904/1990 (Tokukaihei 2-153904)(Publication date: June 13, 1990)
(Patent Document 12)
Japanese Patent Publication No. 2505970 (corresponding to Japanese Unexamined Patent Publication No. 166714/1994 (Tokukaihei 6-166714)(Publication date: June 14, 1994)

DISCLOSURE OF INVENTION

The inventors of the present invention diligently studied so as to solve the foregoing problems. As a result of the study, they found it favorable to use an imide resin, having specific imidization reactivity, which is obtained in accordance with a method wherein an imidizing agent is treated in a methyl-methacrylate-and-styrene copoymer having a specific composition, for a purpose of an optical use. As a result, they completed the present invention.

That is, an imide resin according to the present invention includes: a repeating unit represented by General Formula (1); a repeating unit represented by General Formula (2); and a repeating unit represented by General Formula (3), wherein an orientation birefringence of the imide resin ranges from $-0.1\times10^{-3}$ to $0.1\times10^{-3}$

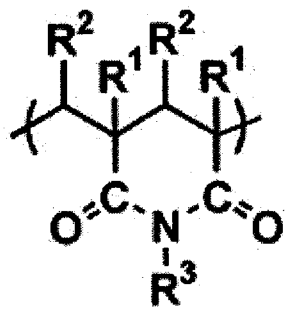

・・・(1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

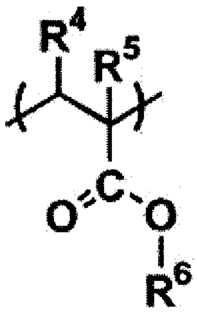

・・・(2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

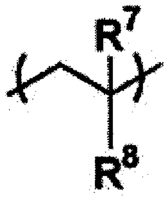

· · · (3)

where $R^7$ represents a hydrogen atom or an alkyl group having 1 to 8 carbon atoms, and $R^8$ represents an aryl group having 6 to 10 carbon atoms.

Further, the imide resin according to the present invention may be arranged so as to include: a repeating unit represented by General Formula (1); a repeating unit represented by General Formula (2); and a repeating unit represented by General Formula (3), wherein the imide resin has a negative orientation birefringence,

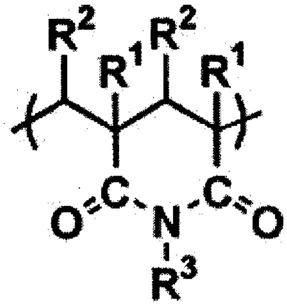

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

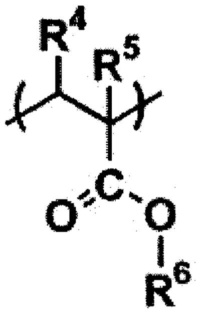

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

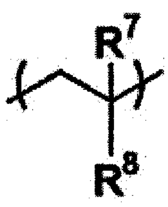

· · · (3)

where $R^7$ represents a hydrogen atom or an alkyl group having 1 to 8 carbon atoms, and $R^8$ represents an aryl group having 6 to 10 carbon atoms.

Further, the imide resin according to the present invention may be arranged so as to include: a repeating unit represented by General Formula (1); a repeating unit represented by General Formula (2); and a repeating unit represented by General Formula (3), wherein a melt viscosity of the imide resin ranges from 1000 to 50000 poise,

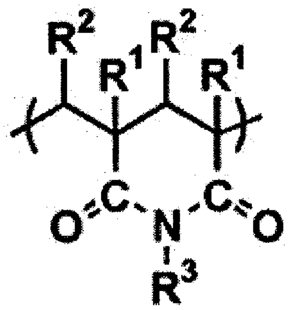

・・・(1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

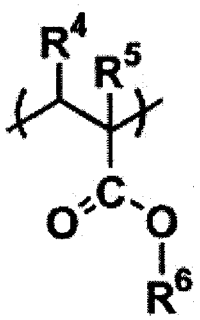

・・・(2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

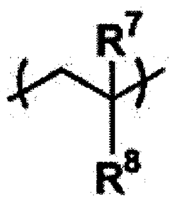

・・・(3)

where $R^7$ represents a hydrogen atom or an alkyl group having 1 to 8 carbon atoms, and $R^8$ represents an aryl group having 6 to 10 carbon atoms.

Further, each of optical resin compositions according to the present invention and a molded product made of the optical resin composition includes any one of the aforementioned imide resins as a main component.

Further, a polarizer-protective film according to the present invention includes an imide resin including: a repeating unit represented by General Formula (1); a repeating unit represented by General Formula (2); and a repeating unit represented by General Formula (3),

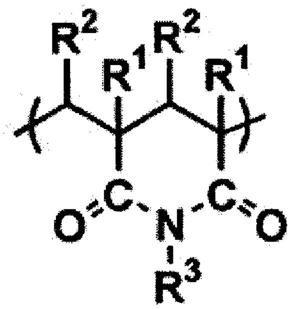

. . . (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

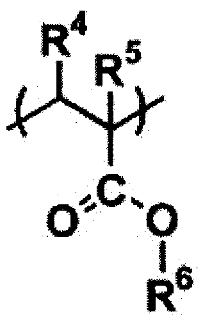

. . . (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

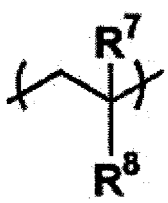

. . . (3)

where $R^7$ represents a hydrogen atom or an alkyl group having 1 to 8 carbon atoms, and $R^8$ represents an aryl group having 6 to 10 carbon atoms.

Further, a polarization plate according to the present invention includes the aforementioned polarizer-protective film.

Further, a method according to the present invention for producing a polarizer-protective film includes the steps of: making, into a film, an imide resin including a repeating unit represented by General Formula (1), a repeating unit represented by General Formula (2), and a repeating unit represented by General Formula (3); and drawing the imide resin having been made into the film,

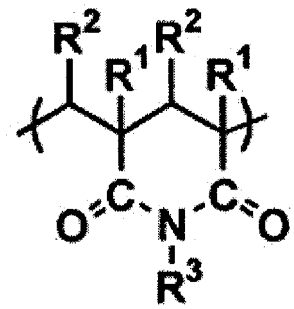

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

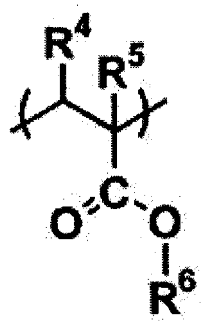

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

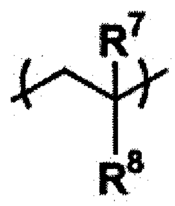

· · · (3)

where $R^7$ represents a hydrogen atom or an alkyl group having 1 to 8 carbon atoms, and $R^8$ represents an aryl group having 6 to 10 carbon atoms.

Further, a retardation film according to the present invention includes an imide resin including: a repeating unit represented by General Formula (1); a repeating unit represented by General Formula (2); and a repeating unit represented by General Formula (3),

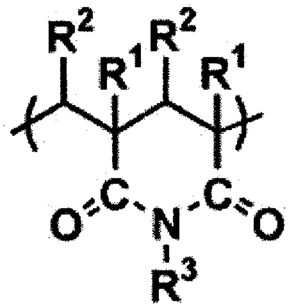

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

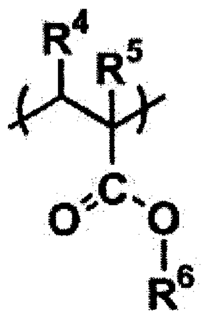

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

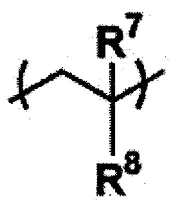

· · · (3)

where $R^7$ represents a hydrogen atom or an alkyl group having 1 to 8 carbon atoms, and $R^8$ represents an aryl group having 6 to 10 carbon atoms.

Further, a method according to the present invention for producing a retardation film includes the steps of: making, into a film, an imide resin including a repeating unit represented by General Formula (1), a repeating unit represented by General Formula (2), and a repeating unit represented by General Formula (3); and drawing the imide resin having been made into the film,

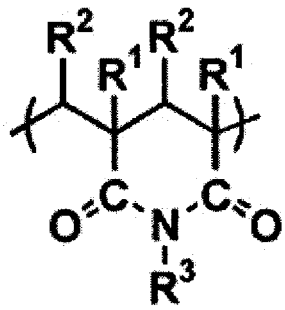

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

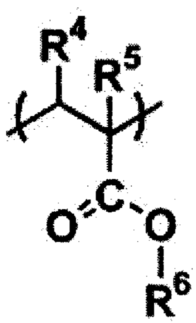

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

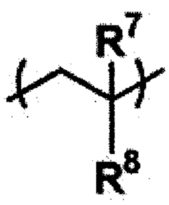

· · · (3)

where $R^7$ represents a hydrogen atom or an alkyl group having 1 to 8 carbon atoms, and $R^8$ represents an aryl group having 6 to 10 carbon atoms.

Further, a method according to the present invention for producing an imide resin, which includes a repeating unit represented by General Formula (1) and has substantially no orientation birefringence, includes the step of: treating, with an imidization agent, an imide resin including a repeating unit represented by General Formula (2) and a repeating unit represented by General Formula (3) so that a quantity of the repeating unit represented by General Formula (3) is 15 wt% or more and 40 wt% or less,

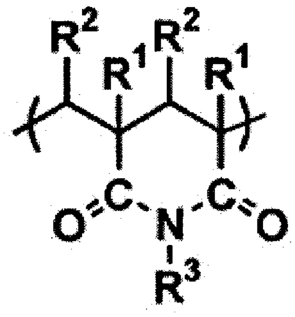

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

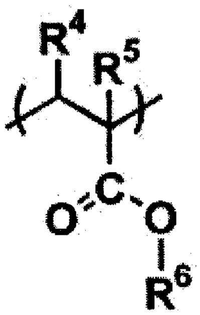

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

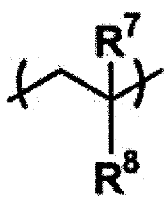

· · · (3)

where $R^7$ represents a hydrogen atom or an alkyl group having 1 to 8 carbon atoms, and $R^8$ represents an aryl group having 6 to 10 carbon atoms.

Further, a method according to the present invention for producing an imide resin which includes a repeating unit represented by General Formula (1) and has a negative orientation birefringence, includes the step of: treating, with an imidization agent, an imide resin including a repeating unit represented by General Formula (2) and a repeating unit represented by General Formula (3) so that a quantity of the repeating unit represented by General Formula (3) is 20 wt% or more and 40 wt% or less,

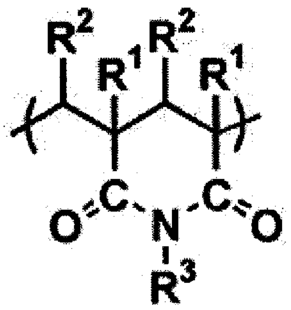

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

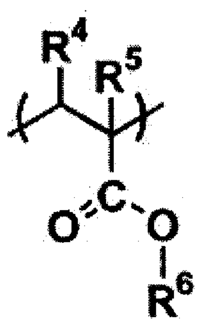

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

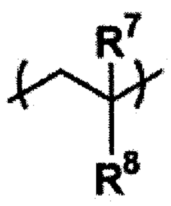

· · · (3)

where $R^7$ represents a hydrogen atom or an alkyl group having 1 to 8 carbon atoms, and $R^8$ represents an aryl group having 6 to 10 carbon atoms.

Further, an imidized methacrylic resin composition according to the present invention which is modified by treating, with an imidization agent, a methacrylic resin composition (C) obtained by copolymerizing a methacrylic ester polymer (A) in the presence of acrylic ester cross-linked elastic particles (B), the methacrylic ester polymer (A) being a polymer obtained by polymerizing a monomer mixture containing 50 to 99 wt% of methacrylic alkylester, 0 to 49 wt% of acrylic alkyl ester, and 1 to 50 wt% of aromatic vinyl monomer, the acrylic ester cross-linked elastic particles (B) being a copolymer obtained by polymerizing a monomer mixture (b) containing 50 to 100 wt% of acrylic alkyl ester and 50 to 0 wt% of methacrylic alkyl ester with a multifunctional monomer having two or more unconjugated double bonds in each molecule.

Further, the imidized methacrylic resin composition may be formed into a molded product and a film. Moreover, the film is laminated on metal or plastic as a laminate.

Additional objects, features, and strengths of the present invention will be made clear by the description below. Further, the advantages of the present invention will be evident from the following explanation in reference to the drawings.

BRIEF DESCRIPTION OF DRAWINGS

Fig. 1 illustrates an IR spectrum of an imide resin.
Fig. 2 illustrates an IR spectrum of an imide resin.
Fig. 3 illustrates an IR spectrum of an imide resin.

BEST MODE FOR CARRYING OUT THE INVENTION

[Imide resin (thermoplastic resin)]

The present invention relates to an imide resin including repeating units respectively represented by General Formulas (1), (2), and (3). More specifically, the imide resin of the present invention is an imide resin includes a repeating unit represented by General Formula (1), a repeating unit represented by General Formula (2), and a repeating unit represented by General Formula (3),

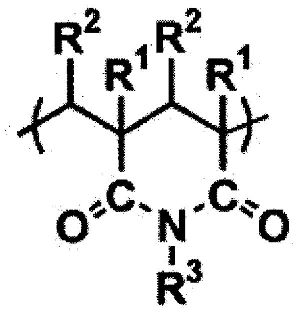

・・・(1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

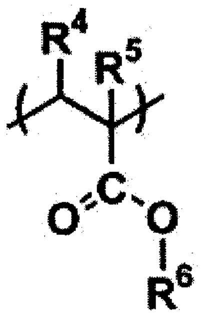

・・・(2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

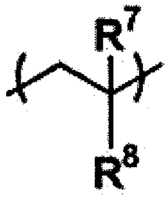

・・・(3)

where $R^7$ represents a hydrogen atom or an alkyl group having 1 to 8 carbon atoms, and $R^8$ represents an aryl group having 6 to 10 carbon atoms.

A first constitutional unit of the imide resin (thermoplastic resin) of the present invention is a repeating unit represented by General Formula (1) (glutarimide unit).

A preferable repeating unit represented by General Formula (1) is as follows: each of $R^1$ and $R^2$ is a hydrogen atom or a methyl group, and $R^3$ is a hydrogen atom, a methyl group, or a cyclohexyl group. It is particularly preferable that: $R^1$ is a methyl group, and $R^2$ is a hydrogen atom, and $R^3$ is a methyl group.

The first constitutional unit may be a single type, or $R^1$, $R^2$, and $R^3$ may respectively include different types.

A second constitutional unit of the imide resin (thermoplastic resin) of the present invention is a repeating unit represented by General Formula (2) ((meth)acrylic ester unit).

A favorable repeating unit represented by General Formula (2) is not particularly limited as long as the repeating unit is methacrylic alkyl ester or acrylic alkyl ester. Examples thereof include methyl (meth)acrylate, ethyl (meth)acrylate, butyl (meth)acrylate, isobutyl (meth)acrylate, t-butyl (meth)acrylate, benzyl (meth)acrylate, cyclohexyl (meth)acrylate, and the like. Further, it is possible to imidize: acid anhydride such as maleic anhydride or half ester of the acid anhydride and branched or unbranched alcohol containing 1 to 20 carbon atoms; and α, β-ethylene unsaturated carboxylic acid such as acrylic acid, methacrylic acid, maleic acid, maleic anhydride, itaconic acid, itaconic anhydride, crotonic acid, fumaric acid, citraconic acid, and the like, so that they are applicable to the present invention. Among them, it is particularly preferable to use methyl methacrylate.

The second constitutional unit may be a single type, or $R^4$, $R^5$, and $R^6$ may respectively include different types.

A third constitutional unit of the imide resin (thermoplastic resin) of the present invention is a repeating unit represented by General Formula (3) (aromatic vinyl unit).

Examples of a preferable repeating unit represented by General Formula (3) include styrene, α-methylstyrene, vinyltoluene, vinylnaphthalene, and the like. Among them, it is particularly preferable to use styrene.

The third constitutional unit may be a single type, or $R^7$ and $R^8$ may respectively include different types.

In the imide resin (thermoplastic resin), it is preferable that an amount of the glutarimide unit included is 20 wt% or more with respect to the imide resin (thermoplastic resin). The amount of the glutarimide unit included preferably ranges from 20 wt% to 95 wt%, more preferably from 40 wt% to 90 wt%, still more preferably from 50 wt% to 80 wt%. In case where the amount of the glutarimide unit is smaller than the range, the resultant imide resin may have insufficient heat resistance or insufficient transparency. Further, in case where the amount of the glutarimide unit exceeds the range, the heat resistance unnecessarily increases. As a result, it is difficult to form various kinds of films described later, and a molded product such as a film finally obtained is extremely brittle in view of the mechanical strength. Further, the transparency may be insufficient.

In the imide resin (thermoplastic resin) of the present invention, a fourth constitutional unit may be further copolymerized as required. As the fourth constitutional unit, it is possible to use a constitutional unit obtained by copolymerizing a nitryl monomer such as acrylonitrile and methacrylonitrile with a maleimide monomer such as maleimide, N-methylmaleimide, N-phenylmaleimide, and N-cyclohexylmaleimide. They may be directly copolymerized with each other in the imide resin (thermoplastic resin) or may be graft-copolymerized with each other.

Further, it is preferable that the imide resin has a weight-average molecular weight of $1\times10^4$ through $5\times10^5$. In case where the weight-average molecular weight is lower than the foregoing value, a film finally obtained may have insufficient mechanical strength. In case where the weight-average molecular weight exceeds the foregoing value, the resin finally obtained has high melt viscosity, so that the productivity of the film may drop.

The viscosity of the imide resin in melting (melt viscosity) ranges from 1000 to 100000 poise. In this range, the melt viscosity preferably ranges from 1000 to 50000 poise, more preferably from 4000 to 30000 poise, still more preferably from 7000 to 20000 poise. The melt viscosity is obtained by carrying out measurement using a capillary rheometer at 260˚C with a shearing rate of 122 $sec^{-1}$. In case where the melt viscosity is larger than the foregoing value, there is a great difference between a pressure exerted to the resin before passing through a foreign substance and a pressure exerted to the resin after passing through the foreign substance at the time of extrusion in the production steps described later, so that it is difficult to form the film. Further, as described above, the melt viscosity interrelates with a molecular weight, so that the molecular weight decreases when the melt viscosity is smaller than the foregoing value. As a result, when the resin having such value is formed into a film, its mechanical strength is insufficient.

A glass transition temperature of the imide resin (thermoplastic resin) is preferably 100˚C or higher, more preferably 120˚C or higher, still more preferably 130˚C or higher.

It is possible to add other thermoplastic resin to the imide resin (thermoplastic resin) of the present invention as required.

The imide resin of the present invention is characterized by a small photoelastic coefficient. The photoelastic coefficient of the imide resin of the present invention is preferably $20\times10^{-12}m^2/N$ or less, more preferably $10\times10^{-12}m^2/N$ or less, still more preferably $5\times10^{-12}m^2/N$ or less.

In case where the absolute value of the photoelastic coefficient is larger than $20\times10^{-12}m^2/N$, light leakage is likely to occur. Particularly at high temperature and high humidity, this tendency becomes more apparent.

The photoelastic coefficient is as follows: when a stress ($\Delta F$) is generated by exerting an external force to an isotopic solid, optical anisotropy temporarily occurs, so that a double refraction ($\Delta n$) occurs. A ratio of the stress and the double refraction is referred to as the photoelastic coefficient (c), and is expressed as

$$c = \Delta n / \Delta F.$$

In the present invention, the photoelastic coefficient is a value obtained by carrying out measurement at a wavelength of 515 nm, 23˚C, and 50 %RH, in accordance with a Senarmont method.

A molded product made of the imide resin of the present invention is applicable, for example, to: an imaging field such as an imaging lens, a finder, a filter, a prism, a Fresnel lens, and the like for a camera, a VTR, and a projector; a lens field such as an optical disk pickup lens for a CD player, a DVD player, an MD player, and the like; an optical disc recording field such as a CD player, a DVD player, an MD player, and the like; an information device field such as (i) a liquid crystal display film such as a liquid crystal optical waveguide, a polarizer-protective film, a retardation film, and the like, and (ii) a surface protective film; an optical communication field such as an optical fiber, an optical switch, an optical connector, and the like; an automobile field such as an automobile headlight, an automobile rear light, an automobile inner lens, an automobile gauge cover, an automobile sunroof, and the like; a medical instrument field such as an eyeglass, a contact lens, an endoscope lens, a medical kit requiring sterilization, and the like; a construction/building material field such as a road photic plate, a double glass lens, a transom window, a carport, an illumination lens, an illumination cover, a construction siding board, and the like; a microwave oven cooking container (food vessel); a home electric appliance housing; a toy; a sunglass; a stationery; and the like.

[Production method of imide resin (thermoplastic resin)]

A glutarimide resin is recited in USP No. 3,284,425, USP No. 4,246,374, Japanese Unexamined Patent Publication Tokukaihei 2-153904, and it is known that the glutarimide resin is obtained as follows: a resin made mainly of methacrylic acid methylester or the like which is a resin having an imidizable unit is used so as to imidize the resin having the imidizable unit by using ammonia or substitutional amine, thereby obtaining the glutarimide resin.

The imide resin (thermoplastic resin) of the present invention can be obtained by imidizing a methyl methacrylate-styrene copolymer (hereinafter, referred to also as MS resin) for example.

The methyl methacrylate-styrene copolymer which can be used in the present invention may be a linear polymer, a block polymer, a core shell polymer, a branched polymer, a ladder polymer, or a cross-linked polymer, as long as the methyl methacrylate-styrene copolymer essentially includes the repeating unit represented by General Formula (2) and the repeating unit represented by General Formula (3). It does not matter whether the block polymer is an A-B type, an A-B-C type, an A-B-A type, or other type. There is no problem in case where the core shell polymer is constituted of a single core layer and a single shell layer or in case where the core and the shell are respectively multi-layered.

For example, in accordance with a method recited in USP No. 4,246,374, an imidization agent is added to the methyl methacrylate-styrene copolymer in the melt phase by using an extruder, thereby obtaining the imide resin of the present invention. Further, for example, in accordance with a method recited in Patent No. 2505970, non-reactive solvent which can dissolve the methyl methacrylate-styrene copolymer and is not reactive with respect to imidization reaction is used so as to add the imidization agent to the methyl methacrylate-styrene copolymer, thereby obtaining the imide resin of the present invention.

The imide resin of the present invention may be obtained by using an extruder or the like or may be obtained by using a batch reactor (pressure vessel) or the like.

Examples of the extruder used in the present invention include a single-screw extruder, a twin-screw extruder, and a multiple-screw extruder. As an extruder which promotes mixture of the imidization agent and the methyl methacrylate-styrene copolymer, it is preferable to use the twin-screw extruder. Types of the twin-screw extruder are a non-intermeshing co-rotating type, an intermeshing co-rotating type, a non-intermeshing counter-rotating type, and an intermeshing counter-rotating type. Among the twin-screw extruders, it is preferable to use the intermeshing co-rotating type because this type can rotate at a high speed, so that it is possible to promote mixture of the imidization agent and the methyl methacrylate-styrene copolymer. These extruders may be independently used or may be serially connected to each other. Further, it is preferable to provide the extruder with a vent port which allows depressurization down to not more than atmospheric pressure so as to remove an unreacted imidization agent and a by-product.

Instead of the extruder, it is possible to favorably use a reaction device, which covers a high viscosity, such as a horizontally biaxial reaction device, e.g., Bibolac (product of Sumitomo Heavy Industries, Ltd.), and a vertically biaxial reaction device, e.g., Superblend.

The batch reactor (pressure vessel) used in the present invention is not particularly limited as long as it is possible to heat and stir solution obtained by dissolving the methyl methacrylate-styrene copolymer and it is possible to add the imidization agent. However, promotion of the reaction sometimes results in a higher viscosity of the polymer solution, so that it is preferable to use a reaction chamber which can efficiently stir the solution. An example thereof is a stirring vessel (Maxblend: product of Sumitomo Heavy Industries, Ltd.).

The imide resin of the present invention is obtained also as follows: non-reactive solvent which can dissolve the methyl methacrylate-styrene copolymer and is not reactive with respect to imidization reaction is used so as to add the imidization agent to the methyl methacrylate-styrene copolymer in the solution phase, thereby obtaining the imide resin of the present invention.

Examples of the non-reactive solvent which is not reactive with respect to the imidization reaction include: an aliphatic alcohol such as methyl alcohol, ethyl alcohol, propyl alcohol, isopropyl alcohol, butyl alcohol, and isobutyl alcohol; an aromatic hydrocarbon such as benzene, toluene, xylene, chlorobenzene, and chlorotoluene; a ketone/ether compound such as methylethylketone, tetrahydrofuran, and dioxane; and the like. These solvents may be independently used or a mixture of two or more kinds may be used. Among them, it is preferable to use toluene or a mixture solvent obtained by mixing toluene with methyl alcohol.

In view of the cost, it is more preferable that the concentration of the methyl methacrylate-styrene copolymer contained in the non-reactive solvent is lower. A solid content thereof ranges from 10 to 80 %, particularly preferably from 20 to 70 %.

The imidization agent used in the present invention is not particularly limited as long as the agent can imidize the methyl methacrylate-styrene copolymer. However, examples of the imidization agent include: aliphatic hydrocarbonous amine such as ammonia, methylamine, ethylamine, n-propylamine, i-propylamine, n-butylamine, i-butylamine, tert-butylamine, and n-hexylamine; aromatic hydrocarbonous amine such as aniline, toluidine, and trichloroaniline; and alicyclic hydrocarbonous amine such as cyclohexylamine. Further, it is possible to use a urea compound, which generates these amines upon being heated, such as urea, 1,3-dimethyl urea, 1,3-diethyl urea, and 1,3-dipropyl urea. Among these imidization agents, it is preferable to use methylamine, ammonia, and cyclohexylamine in view of the cost and properties, and it is particularly preferable to use methylamine.

An amount of the imidization agent added is determined in accordance with an imidization rate required in exhibiting a necessary property.

In order to promote the imidization and in order to suppress decomposition and coloring of the resin which are caused by excessive heating at the time of imidization of the methyl methacrylate-styrene copolymer, the reaction is carried out at a temperature ranging from 150 to 400˚C. The reaction temperature preferably ranges from 180 to 320˚C, more preferably from 200 to 280˚C.

In imidizing the methyl methacrylate-styrene copolymer with the imidization agent, it is possible to add a catalyst, an oxidation inhibitor, a heat stabilizer, an elasticizer, a lubricant, an ultraviolet absorption agent, an antistatic additive, a coloring agent, a shrinkage inhibitor, and the like, all of which are generally used, as long as the addition does not deviate from the object of the present invention.

The imide resin of the present invention is characterized by high tensile strength, high flexural strength, solution resistance, heat stability, favorable optical property, antiweatherability, and the like.

The imide resin obtained in the present invention may be independently used or may be blended with other thermoplastic polymer. The imide resin independently used or a mixture obtained by blending the imide resin with other thermoplastic polymer can be variously molded into a molded product in accordance with various kinds of plastic processing methods such as injection molding, extrusion molding, blow molding, compression molding, and the like. Further, the molded product can be molded also in accordance with a flow casting method in which: the imide resin obtained in the present invention is dissolved in solvent such as methylene chloride, and the thus obtained polymer solution is used.

In molding the molded product, it is possible to add an oxidation inhibitor, a heat stabilizer, an elasticizer, a lubricant, an ultraviolet absorption agent, an antistatic additive, a coloring agent, a shrinkage inhibitor, and the like, all of which are generally used, as long as the addition does not deviate from the object of the present invention. [Imide resin having no orientation birefringence]

The present embodiment describes an imide resin which has excellent transparency, excellent heat resistance, and a low orientation birefringence. The imide resin of the present embodiment has substantially no orientation birefringence. The orientation birefringence means double refraction caused by orientation. In this specification, unless particularly mentioned, the orientation birefringence means double refraction which occurs in case where drawing is carried out by a factor of 100 % (twice) at a temperature higher than a glass transition temperature of the imide resin by 5˚C.

Here, the orientation birefringence (An) is defined as

$$\Delta n = nx - ny$$

where nx is a refraction index in a direction of a drawing axis (x axis) and ny is a refraction index in a direction of an axis (y axis) orthogonal to the drawing axis in a film surface.

A value of the orientation birefringence preferably ranges from $-0.1\times10^{-3}$ to $0.1\times10^{-3}$, more preferably from $-0.01\times10^{-3}$ to $0.01\times10^{-3}$. In case where the orientation birefringence is out of the foregoing range, an environmental

change is likely to generate a double refraction at the time of molding, so that it is impossible to obtain a stable optical property.

In addition to the condition explained in [Imide resin (thermoplastic resin)], the imide resin having no orientation birefringence can be obtained by adjusting an amount of the repeating unit represented by General Formula (3).

In the imide resin (thermoplastic resin), the amount of the repeating unit represented by General Formula (3) is preferably 10 wt% or more with respect to an amount of total repeating units of the imide resin (thermoplastic resin). The amount of the repeating unit represented by General Formula (3) preferably ranges from 10 wt% to 40 wt%, more preferably from 15 wt% to 30 wt%, still more preferably from 15 to 25 wt%. In case where the amount of the repeating unit represented by General Formula (3) is larger than the foregoing range, the imide resin finally obtained may have insufficient heat resistance and a larger photoelastic coefficient. In case where the amount of the repeating unit represented by General Formula (3) is smaller than the foregoing range, the mechanical strength of the imide resin finally obtained may drop. Further, in case where the amount of the repeating unit represented by General Formula (3) deviates from the foregoing range, it is difficult to obtain the molded product having substantially no orientation birefringence.

Further, a weight ratio of the repeating unit represented by General Formula (1) and the repeating unit represented by General Formula (3) preferably ranges from 2.0 : 1.0 to 4.0 : 1.0, more preferably from 2.5 : 1.0 to 4.0 : 1.0, still more preferably from 3.0 : 1.0 to 3.5 : 1.0. Further, in case where a ratio of the repeating unit represented by General Formula (1) and the repeating unit represented by General Formula (3) is defined on the basis of a molar ratio, a molar ratio of the repeating unit represented by General Formula (1) and the repeating unit represented by General Formula (3) preferably ranges from 1.0 : 1.0 to 4.0 : 1.0, more preferably from 1.0 : 1.0 to 3.0 : 1.0, still more preferably from 1.2 : 1.0 to 2.5 : 1.0. Note that, the molar ratio means a numerical ratio of the repeating units included in the copolymer.

[Imide resin having negative orientation birefringence]

The present embodiment explains an imide resin which has excellent transparency, excellent heat resistance, and negative double refraction. The imide resin of the present embodiment is characterized by the negative double refraction. It is preferable that a value of the orientation birefringence is $-0.15\times10^{-3}$ or less. In case where the value of the orientation birefringence is out of the foregoing range, it is impossible to effectively use the negative double refraction, so that it is impossible to obtain a sufficient phase difference value when the imide resin is used as a retardation film.

In addition to the condition explained in [Imide resin (thermoplastic resin)], the imide resin having negative orientation birefringence can be obtained by adjusting an amount of the repeating unit represented by General Formula (3).

In the imide resin (thermoplastic resin), the amount of the repeating unit represented by General Formula (3) is preferably 10 wt% or more with respect to an amount of total repeating units of the imide resin (thermoplastic resin). The amount of the repeating unit represented by General Formula (3) preferably ranges from 20 wt% to 50 wt%, more preferably from 30 wt% to 50 wt%, still more preferably from 35 to 45 wt%. In case where the amount of the repeating unit represented by General Formula (3) is larger than the foregoing range, the imide resin finally obtained may have insufficient heat resistance and a larger photoelastic coefficient. In case where the amount of the repeating unit represented by General Formula (3) is smaller than the foregoing range, the mechanical strength of the imide resin finally obtained may drop, or it is difficult to obtain the molded product having negative orientation birefringence. [Imide resin having positive double refraction]

The present embodiment explains an imide resin which has excellent transparency, excellent heat resistance, and positive double refraction. The imide resin of the present embodiment is characterized by the positive double refraction. It is preferable that a value of the orientation birefringence is $0.15\times10^{-3}$ or more. In case where the value of the orientation birefringence is out of the foregoing range, it is impossible to effectively use the positive double refraction, so that it is impossible to obtain a sufficient phase difference value when the imide resin is used as a retardation film.

In addition to the condition explained in [Imide resin (thermoplastic resin)], the imide resin having positive orientation birefringence can be obtained by adjusting an amount of the repeating unit represented by General Formula (3).

In the imide resin (thermoplastic resin), the amount of the repeating unit represented by General Formula (3) is preferably 20 wt% or less with respect to an amount of total repeating units of the imide resin (thermoplastic resin). The amount of the repeating unit represented by General Formula (3) preferably ranges from 5 wt% to 20 wt%, more preferably from 5 wt% to 10 wt. In case where the amount of the repeating unit represented by General Formula (3) is larger than 20 wt%, it is difficult to obtain the imide resin having positive orientation birefringence. In case where the amount of the repeating unit represented by General Formula (3) is smaller than the 5 wt%, the mechanical strength of the molded product finally obtained may drop.

[Polarizer-protective film]

Next, a polarizer-protective film using the imide resin is described as follows. As described above, the polarizer-protective film of the present embodiment is provided on a linear polarization plate or the like which is widely used as a part constituting a liquid crystal display device for example. The polarizer-protective film holds the polarization film so as to give practical strength to the whole polarization plate or so as to function in a similar manner.

The polarizer-protective film can be obtained by molding the aforementioned imide resin. Unless particularly mentioned, the aforementioned imide resin can be favorably used as an imide resin constituting the polarizer-protective film of the present invention.

Note that, in the imide resin (thermoplastic resin), an amount of the repeating unit represented by General Formula (3) is preferably 5 wt% or more with respect to an amount of total repeating units of the imide resin (thermoplastic resin). The amount of the repeating unit represented by General Formula (3) preferably ranges from 5 wt% to 50 wt%, more preferably from 10 wt% to 40 wt%, still more preferably from 15 to 40 wt%. In case where the amount of the repeating unit represented by General Formula (3) is larger than the foregoing range, the film finally obtained may have insufficient heat resistance and a larger photoelastic coefficient. In case where the amount of the repeating unit represented by General Formula (3) is smaller than the foregoing range, the mechanical strength of the film finally obtained may drop.

As a method for molding the imide resin (thermoplastic resin) into the polarizer-protective film of the present invention, any conventional known method is adoptable. Examples of the method include a solvent casting method, a melt molding method, and the like. Any of these methods can be adopted. The solvent casting method is suitable for formation of a film whose resin is less deteriorated and surface property is favorable. The melt molding method realizes high productivity in forming films. As the solution used in the solvent casting method, methylene chloride and the like can be favorably used. Examples of the melt molding method include a melt extrusion method, an inflation method, and the like.

The thickness of the polarizer-protective film of the present invention preferably ranges from 20 μm to 300 μm, more preferably from 30 μm to 200 μm, still more preferably from 30 μm to 100 μm. Further, the thickness irregularity of the film is preferably 10 % or less, more preferably 5 % or less, with respect to an average thickness.

A light transmittance of the polarizer-protective film of the present invention is preferably 85 % or more, more preferably 88 % or more, still more preferably 90 % or more. Further, the turbidity of the film is preferably 2 % or less, more preferably 1 % or less, still more preferably 0.5 % or less.

In this specification, for convenience in description, a film which has been obtained by molding the imide resin (thermoplastic resin) and has not been drawn is referred to as a "raw film".

The raw film can be used as the polarizer-protective film without being drawn. However, in producing the retardation film of the present invention, it is preferable to uniaxially or biaxially stretch the film, having been molded on the basis of the foregoing method, into a film having a predetermined thickness. By drawing the film, it is possible to further improve the mechanical property of the film. An example of how the arrangement is implemented is as follows: after the raw film having the thickness of 150 μm is produced in accordance with the melt extrusion molding, the thus obtained raw film is subjected to vertically and horizontally biaxially stretching, so that a film having the thickness of 40 μm can be produced.

The drawing of the film may be continuously carried out just after molding the raw film. Here, the film may be in the "raw film" phase only in a moment. In case where the film is in the "raw film" phase only in a moment, the film which has been formed and has not been drawn in this moment is referred to as the raw film. Further, the raw film does not have to be completely in a film shape as long as the raw film can be drawn even if the raw film is insufficiently in a film shape. Of course, the raw film does not have to function as a complete film. Further, the following arrangement may be adopted: after the raw film is formed, the film is temporarily reserved or moved as required, and then the film is drawn. As a method for drawing the film, any conventional known drawing method is adoptable. Specific examples of the method include: horizontal drawing with a tenter; vertical drawing with a roll; sequential biaxially stretching in which the foregoing two drawings are sequentially carried out; and the like. Further, it is possible to adopt a simultaneous biaxially stretching method in which vertical drawing and horizontal drawing are simultaneously carried out. Also, it is possible to adopt a method in which horizontal drawing is carried out with a tenter after carrying out vertical drawing with a roll.

The polarizer-protective film of the present invention can be regarded as a final product when the film is in a uniaxially drawn film phase. Further, the film may be made into a biaxially stretched film by combining the drawing steps. In case of carrying out the biaxially stretching, the vertical drawing and the horizontal drawing may be equal with each other in terms of the drawing conditions such as a drawing temperature, a drawing scale factor, and the like, as required. Further, mechanical anisotropy may be given to the film by intentionally differentiating both the drawings from each other in terms of these conditions.

By adjusting the drawing temperature and the drawing scale factor at which the film is drawn, it is possible to suitably adjust the mechanical strength, the surface property, and the thickness accuracy of the finally obtained film as

indexes. The drawing temperature preferably ranges from Tg-30˚C to Tg+30˚C, more preferably from Tg-20˚C to Tg+20˚C, where Tg is a film glass transition temperature calculated in accordance with the DSC method. It is still more preferable that the drawing temperature is not less than Tg and not more than Tg+20˚C. When the drawing temperature is too high, the thickness of the obtained film is likely to be more irregular, and improvement of mechanical properties such as elongation, tear propagation strength, crease-flex fatigue resistance, and the like is likely to be insufficient. Further, a trouble such as adhesion of the film to the roll is likely to occur. Adversely, in case where the drawing temperature is too low, the turbidity of the drawn film is likely to be higher. In an extreme case, the film under this condition is likely to have production problems such as tear or breakage of the film. A favorable drawing scale factor depends on the drawing temperature, but the drawing scale factor preferably ranges from 1.1 to 3. The drawing scale factor more preferably ranges from 1.3 to 2.5, still more preferably from 1.5 to 2.3.

Further, in forming the film, as necessary, the material may include: a treatability improving agent such as a heat stabilizer, an ultraviolet absorption agent, and a lubricant; a known addition agent such as a filler; or other polymer. Particularly, the filler may be included in order to improve the sliding property. As the filler, inorganic or organic fine particles can be used. Examples of the inorganic fine particles include: metal oxide fine particles such as silicon dioxide, titanium dioxide, aluminum oxide, zirconium oxide; silicate fine particles such as calcined calcium silicate, hydrated calcium silicate, aluminum silicate, and magnesium silicate; calcium carbonate; talc; clay; calcined kaolin; calcium phosphate; and the like. Examples of the organic fine particles include resin fine particles such as silicon resin, fluorine resin, acrylic resin, cross-linked styrene resin, and the like.

It is practically preferable to provide the ultraviolet absorption agent into the polarizer-protective film since it is possible to improve the antiweatherability of the polarizer-protective film and it is possible to improve the durability of the liquid crystal display device using the polarizer-protective film. Examples of the ultraviolet absorption agent include: benzotriazole ultraviolet absorption agent such as 2-(2H-benzotriazole-2-yl)-p-cresol, 2-benzotriazole-2-yl-4, 6-di-t-butylphenol; triazine ultraviolet absorption agent such as 2-(4,6-diphenyl-1,3,5-triazine-2-yl)-5-[(hexyl)oxy]-phenol; benzophenone ultraviolet absorption agent such as octabenzone; and the like. Further, it is possible to use: benzoate light stabilizer such as 2,4-di-t-butylphenyl-3,5-di-t-butyl-4-hydroxy benzoate; and hindered-amine light stabilizer such as bis (2,2,6,6-tetramethyl-4-piperidyl)sebacate.

The polarizer-protective film of the present invention can be subjected to surface treatment as required so that adhesiveness with respect to other material is improved. As the surface treatment method, any conventional known method can be adopted. Examples of the surface treatment method include: an electric treatment such as a corona discharging treatment, a spark treatment, and the like; a plasma treatment under low pressure or normal pressure; an ultraviolet ray irradiation treatment in the presence or in the absence of ozone; an acid treatment using chromic acid or the like; a flame treatment; and a silane or titanium primer treatment; and the like. According to these methods, it is possible to adjust a surface tension of the film surface to 50 dyne/cm or more.

Further, in order to improve the affinity with respect to the adhesive or the glutinant, it is possible to provide an adhesion facilitating layer on one side or both sides of the film. Favorable examples of the adhesion facilitating layer include: a copolymerized polyester or a urethane-denaturalized copolymerized polyester; a copolymerized polyester having a carboxyl group or a sulfonic group; and a layer in which solution such as polyvinyl alcohol or polyvinyl alcohol water dispersion is applied to its surface and the surface is dried.

The polarizer-protective film of the present invention can be subjected to a coating treatment such as hard coating, anti-glare coating, invisible coating, and other functional coating, as required.

Note that, it is preferable that the polarizer-protective film has substantially no orientation birefringence. A value of the orientation birefringence is preferably $-0.1\times10^{-3}$ or more and $0.1\times10^{-3}$ or less, more preferably $-0.1\times10^{-4}$ or more and $0.1\times10^{-4}$ or less. In case where the value of the orientation birefringence is out of the foregoing range, it is impossible to obtain a stable optical property when the environment changes.

In the polarizer-protective film having no orientation birefringence, the aforementioned imide resin having no orientation birefringence can be used as the imide resin to be molded.

More specifically, in the imide resin (thermoplastic resin), an amount of the repeating unit represented by General Formula (3) is preferably 10 wt% or more with respect to a total amount of the repeating units of the imide resin (thermoplastic resin). The amount of the repeating unit represented by General Formula (3) preferably ranges from 10 wt% to 40 wt%, more preferably from 15 wt% to 30 wt%, still more preferably from 15 wt% to 25 wt%. In case where the amount of the repeating unit represented by General Formula (3) is larger than the foregoing range, a resultant film may have insufficient heat resistance and a larger photoelastic coefficient. In case where the amount of the repeating unit represented by General Formula (3) is smaller than the foregoing range, the resultant film may have lower mechanical strength. In case where the amount of the repeating unit represented by General Formula (3) deviates from the foregoing range, it is difficult to obtain a film having substantially no orientation birefringence.

As the imide resin (thermoplastic resin) used, it is preferable to use an imide resin obtained by imidizing a methyl methacrylate-styrene copolymer including 10 wt% to 40 wt% of the repeating unit represented by General Formula (3), and it is more preferable to use an imide resin obtained by imidizing a methyl methacrylate-styrene copolymer

including 15 wt% to 30 wt% of styrene, and it is still more preferable to use an imide resin obtained by imidizing the MS resin including 15 wt% to 25 wt% of the repeating unit represented by General Formula (3).

In order to obtain a film having substantially no orientation birefringence, it is necessary to adjust an amount of each constitutional unit of the imide resin (thermoplastic resin), and a weight ratio of the repeating unit represented by General Formula (1) and the repeating unit represented by General Formula (3) preferably ranges from 2.0 : 1.0 to 4.0 : 1.0, more preferably from 2.5 : 1.0 to 4.0 : 1.0, still more preferably from 3.0 : 1.0 to 3.5 : 1.0. In case of defining the amount not by the weight ratio but by a molar ratio, a molar ratio of the repeating unit represented by General Formula (1) and the repeating unit represented by General Formula (3) preferably ranges from 1.0 : 1.0 to 4.0 : 1.0, more preferably from 1.0 : 1.0 to 3.0 : 1.0, still more preferably from 1.2 : 1.0 to 2.5 : 1.0. Note that, the molar ratio means a numeral ratio of the repeating units included in the copolymer. In case where the molar ratio deviates the foregoing range, it is difficult to obtain a film having substantially no orientation birefringence. [Retardation film]

The following explains: a retardation film (i) which is easily produced, (ii) which has excellent transparency, heat resistance, and mechanical characteristic, and (iii) which has a uniform phase difference; and a method for producing the retardation film. As described above, the retardation film of the present embodiment is used, for example, in a liquid crystal display so as to serve as a double-refraction film for changing a relative phase of a component of polarized light.

The retardation film can be obtained by molding the imide resin described above. Therefore, it is possible to realize a retardation film having a small photoelastic coefficient. That is, it is possible to obtain a retardation film whose variations in phase difference can be suppressed.

Unless otherwise noted, the imide resin described above can be used suitably as an imide resin used for the retardation film of the present invention.

An amount of the glutarimide unit, represented by General Formula (1), which is contained in the imide resin (thermoplastic resin) is preferably 20 wt% or more. The amount of the glutarimide unit contained is preferably 20 wt% to 95 wt%, more preferably 40 wt% to 90 wt%, still more preferably 50 wt% to 80 wt%. In case where the amount of the glutarimide unit contained falls short of the range, the finally obtained film may have insufficient heat-resistance or impaired transparency. Further, in case where the amount of the glutarimide unit contained exceeds the range, the heat resistance of the imide resin unnecessarily increases. Accordingly, it becomes difficult to mold the imide resin into a film, and the film thus obtained may be extremely brittle in terms of mechanical strength. Further, the transparency of the film thus obtained may be impaired.

As a method for molding the imide resin (thermoplastic resin) into a form of the retardation film of the present invention, any publicly-known conventional method can be used. Examples of the conventional method include a solution casting method and a melt molding method, either one of which can be adopted. The solution casting method causes little deterioration in the resin, and is suitable for production of a film having a good surface property. The melt molding method makes it possible to productively obtain a film. Preferable examples of a solution used for the solution casting method include methylene chloride and the like. Examples of the melt molding method include a melt extrusion method and an inflation method and the like.

In this specification, for convenience of explanation, a film which is obtained by molding the imide resin (thermoplastic resin) into the form of a film and which is yet to be drawn is referred to as "raw film".

The thickness of the raw film normally ranges from 30 $\mu$m to 300 $\mu$m, preferably from 50 $\mu$m to 250 $\mu$m. The thickness of the retardation film obtained by drawing the raw film normally ranges from 30 $\mu$m to 150 $\mu$m, preferably 30 $\mu$m to 120 $\mu$m.

Further, the raw film preferably has a phase difference value of 20 nm or less, preferably 10 nm or less. In case where the raw film has a phase difference value of more than 20 nm, the retardation film obtained by drawing the raw film has wide in-plane variations in phase difference values. Therefore, it is undesirable that the raw film has a phase difference value of more than 20 nm.

The retardation film of the present invention preferably has a light transmittance of 85% or higher, more preferably 88% or higher, still more preferably 90% or higher. Further, the film preferably has a turbidity of 2% or lower, more preferably 1% or lower, still more preferably 0.5% or lower.

The retardation film of the present invention is preferably produced as follows. That is, after the raw film is molded in the foregoing manner, the raw film is uniaxially or biaxially stretched such that a film having a predetermined thickness is produced. The drawing causes the retardation film to have a desired phase difference, and further improves the mechanical characteristic of the retardation film. Take the present embodiment as an example. That is, after the raw film having a thickness of 150 $\mu$m is produced by such a melt extrusion molding method, a film having a thickness of 40 $\mu$m can be produced by biaxially stretching the raw film.

The raw film may be drawn immediately after it is continuously molded. On this occasion, the film may be in the "raw film" phase only in a moment. In case where the film is in the "raw film" phase only in a moment, the film which has been formed and has not been drawn in this moment is referred to as the raw film. Further, the raw film needs to neither take the complete form of a film nor exhibit the performance of a finished film as long as the raw film takes so a sufficient form of a film as to be drawn later. Further, when necessary, the raw film thus molded may be either temporarily

stored or transported before it is drawn.

As a method for drawing the raw film, any publicly-known conventional drawing method can be adopted. Specific examples of the conventional drawing method include: a transverse drawing method using a tenter; a longitudinal drawing method using a roll; and a sequential biaxially stretching method, i.e., a sequential combination of the transverse drawing method and the longitudinal drawing method. Further, it is possible to adopt a simultaneous biaxially stretching method by which the raw film is drawn both longitudinally and transversely at the same time. It is also possible to adopt a method by which the raw film is drawn transversely with the use of a tenter after the raw film has been drawn longitudinally with the use of a roll.

The drawn film thus obtained has a desired phase difference for a purpose. When the phase difference of the drawn film is measured by using a light ray having a wavelength of 590 nm, the phase difference of the drawn film ordinarily ranges from 50 nm to 800 nm. It is more preferable that the drawn film have smaller variations in phase difference value. It is particularly preferable that the phase difference value varies within a range of 10 nm. Wider variations in phase difference value cause display unevenness and the like.

The drawing temperature and draw ratio at which the raw film is drawn can be appropriately adjusted by using, as indices, the mechanical strength, surface property, and thickness precision of the film thus obtained. The drawing temperature preferably ranges from Tg-30˚C to Tg+30˚C, more preferably from Tg-20˚C to Tg+20˚C, still more preferably from Tg to Tg+20˚C. Here, Tg is the glass transition temperature of the raw film, and is calculated by using a DSC method. In case where the drawing temperature is too high, the retardation film thus obtained is likely to have great unevenness in thickness. Moreover, such mechanical properties of the film as elongation percentage, tear propagation strength, and crease-flex fatigue are likely to be insufficiently improved. Further, the film may undesirably stick to the roll. On the other hand, in case where the drawing temperature is too low, the drawn film is likely to have a high turbidity. Moreover, in an extreme case, there may be such a production problem that the drawn film cracks or breaks. A preferable draw ratio ranges from 10% (x1.1) to 200% (x3), more preferably 30% (x1.3) to 150% (x2.5), still more preferably 50% (x1.5) to 130% (x2.3). Note that the preferable draw ratio depends on the drawing temperature.

Further, before being molded into a film, the imide resin may be allowed to contain, when necessary, (i) a workability improving agent such as a thermal stabilizer, an ultraviolet absorption agent, and a lubricant, (ii) a publicly-known additive such as a filler, and (iii) other polymers. Particularly, the imide resin may contain the filler so that a sliding property of the film is improved. Examples of the filler include inorganic and organic fine particles. Examples of the inorganic microparticles include: metal oxide particles such as silicon dioxide, titanium dioxide, aluminum oxide, or zirconium oxide; silicate salt microparticles such as calcined calcium silicate, hydrated calcium silicate, aluminum silicate, or magnesium silicate; calcium carbonate; talc; clay; calcined kaolin; and calcium phosphate. Examples of the organic microparticles include resin microparticles such as a silicon resin, a fluorocarbon resin, an acrylic resin, or a cross-linked styrene resin.

In case where the retardation film of the present invention contains the ultraviolet absorption agent, the antiweatherability of the retardation film of the present invention is improved. Moreover, the durability of a liquid crystal display device employing the retardation film of the present invention can also be improved. Therefore, from a practical point of view, it is preferable that the retardation film of the present invention contain the ultraviolet absorption agent. Examples of the ultraviolet absorption agent include: a benzotriazole ultraviolet absorber such as 2-(2H-benzotriazole-2-yl)-p-cresol, 2-benzotriazole-2-yl -4, 6-di-t-butylphenol; a triazine ultraviolet absorber such as 2-(4,6-diphenyl-1,3,5-triazine-2-yl)-5-[(hexyl)oxy]-phenol; and a benzophenone ultraviolet absorber such as octabenzone. Further, a light stabilizer can be used. Examples of the light stabilizer include: a benzoate light stabilizer such as 2,4-di-t-butylphenyl-3,5-di-t-butyl-4-hydroxybenzoate; and a hindered amine light stabilizer such as bis (2,2,6,6-tetramethyl-4-piperidyl)sebacate.

The retardation film of the present invention may be a final product obtained by uniaxially drawing the raw film. Furthermore, the retardation film of the present invention may be a biaxially stretched film obtained by combining drawing steps with each other.

The retardation film obtained in the foregoing manner may be either used as it is or processed in various ways so as to be used for a publicly-known optical application such as a liquid crystal display apparatus and a device related to the liquid crystal display apparatus. The retardation film exhibits an excellent optical characteristic. Specifically, the retardation film has a phase difference which is less uneven and which changes only slightly in response to an external environment. Therefore, the retardation film can be used particularly suitably for a reflective liquid crystal display apparatus, a large-screen liquid crystal display apparatus, and the like.

When necessary, a coating layer such as a hard coat layer can be formed on a surface of the retardation film of the present invention.

Further, the retardation film of the present invention may be provided with a transparent conductive layer such that the coating layer may or may not be interposed between the retardation film and the transparent conductive layer. The transparent conductive layer is formed by using a sputtering method or the like. The transparent conductive layer is made, for example, of an indium tin oxide. As such, the retardation film of the present invention can be used as an

electrode substrate of a liquid crystal display apparatus and as an electrode substrate of a touch panel. It is preferable that the coating layer is formed so as to fall within a thickness range of 0.1 μm to 10 μm, more preferably 1 μm to 5 μm.

Preferable examples of the coating layer include: an organic coating layer such as a melamine resin coating layer, an acrylic resin coating layer, an urethane resin coating layer, an alkyd resin coating layer, or a fluorocarbon resin coating layer; and an organic silicone complex coating layer obtained by combining (i) either polyester polyol or etherified methylol melamine with (ii) either a partial hydrolysate of alkyltrialkoxysilan or a partial hydrolysate of tetraalkoxysilan. Further, a silicone material such as (a) a hydrolysate of each of aminosilan or epoxysilan, (b) a partial hydrolysate of a mixture of a silan coupling agent and alkyltrialkoxysilan, (c) a partial hydrolysate of a mixture of a silan coupling agent and tetraalkoxysilan, or (d) a hydrolysate of each of coloidal silica and alkyltrialkoxysilan can be suitably used.

One or both surfaces of the retardation film of the present invention are coated with the coating material. Thereafter, the coating material is hardened by heat. As a result, a film having a solvent-resistant layer can be obtained. On this occasion, it is preferable that a cold-setting catalyst be simultaneously used so as to inhibit an undesirable thermal denaturation of the film. Further, a hardened layer can be suitably used which is obtained by (i) adding a photosensitizer to a polyfunctional acrylate monomer, a polyfunctional acrylate oligomer, or the like so as to produce a mixture and then (ii) hardening the mixture with the use of ultraviolet rays or electron rays. When necessary, the coating layer can be mixed with various fillers. In case where the retardation film of the present invention has the transparent conductive layer and is used as an electrode film of a resistance film touch panel, the addition of each of the fillers prevents an undesirable Newton's ring from occurring due to an interference of light between transparent electrodes, and prevents transparent conductive substrates from blocking each other. Preferable examples of the filler include: an organic filler such as a polymethacrylate ester filler, a polyacrylate ester filler, a polyolefin filler, a polystyrene filler, a divinylbenzene filler, a bonzoguanamine filler, or an organic silicone filler; and an inorganic filler such as a silica filler, an alumina filler, or a titanium oxide filler. However, the addition of the filler occasionally causes a displayed image to be glaring. Therefore, it is desirable that the image clarity of a transmission image be made to be 80% or higher by optimizing the shape of the filler, a coating agent, and a coating condition.

The retardation film preferably has an orientation birefringence, more preferably a negative orientation birefringence. The negative orientation birefringence is preferably -0.001 or less, more preferably -0.002 or less. In case where the orientation birefringence is more than the above value, the phase difference may be insufficiently expressed.

Here, the double refraction in a direction orthogonal to the plane including the x-axis and the y-axis is defined as the orientation birefringence in the thickness direction of the retardation film. Further, by using the refractive indices (nx, ny) and the refractive index (nz) in the thickness direction of the retardation film, the orientation birefringence in the thickness direction of the retardation film is expressed as:

$$(nx + ny)/2 - nz.$$

In this case, the phase difference (Rth) in the thickness direction of the retardation film is represented by the following expression:

$$Rth = \{(nx+ny)/2-nz\}\times d$$

where d is the thickness of the retardation film.

The retardation film having a negative double refraction is obtained by molding the imide resin having a negative double refraction.

An amount of the repeating unit, represented by General Formula (3), which is contained in the imide resin (thermoplastic resin) is preferably 20 wt% or higher with respect to the total repeating units of the imide resin (thermoplastic resin). The amount of the repeating unit represented by General Formula (3) preferably ranges from 20 wt% to 50 wt%, more preferably from 30 wt% to 50 wt%, still more preferably from 35 wt% to 45 wt%. In case where the amount of the repeating unit represented by General Formula (3) goes beyond the range, the finally obtained film may have insufficient heat resistance and a larger photoelastic coefficient. In case where the amount falls short of the range, a negative orientation birefringence is insufficiently expressed.

Further, it is preferable that a methyl methacrylate-styrene copolymer having a styrene content of 20 wt% to 50 wt% be imidized.

[Imidized metahcrylic resin composition]

The present embodiment explains an imide resin (hereinafter referred to as "imidized metahcrylic resin composition") containing the repeating units respectively represented by General Formulas (1), (2), and (3). The imidized methacrylic resin composition is obtained by treating, with an imidization agent, a core shell methyl methacrylate-styrene copolymer (hereinafter referred to as "methacrylic polymer composition (C)) including cross-linked elastic particles (core layer) (hereinafter referred to as "acrylic ester cross-linked elastic particles (B)) made of the repeating unit represented by General Formula (2); and a polymer (shell layer) (hereinafter referred to as "methacrylic ester polymer (A)) made of the repeating units respectively represented by General Formulas (2) and (3).

The imidized methacrylic resin composition according to the present invention is obtained as follows. That is, the methacrylic resin composition (C) obtained by copolymerizing the methacylic ester polymer (A) in the presence of the acrylic ester cross-linked elastic particles (B) is treated with the imidization agent so as to be modified. The methacrylic ester polymer (A) is a polymer obtained by polymerizing a monomer mixture containing 50 to 99 wt% of methacrylic alkylester, 0 to 49 wt% of acrylic alkyl ester, and 1 to 50 wt%. The acrylic ester cross-linked elastic particles (B) are a copolymer obtained by polymerizing (i) a monomer mixture (b) containing 50 to 100 wt% of acrylic alkyl ester and 50 to 0 wt% of methacrylic alkyl ester with (ii) a polyfunctional monomer having two or more unconjugated double bonds in each molecule.

The optical imidized methacrylic resin composition of the present invention is a thermoplastic resin which has a small orientation birefringence and which has excellent secondary workability (bending resistance), transparency, and heat resistance. Therefore, the imidized methacrylic resin composition can be applied to various molded products such as an optical part and a vehicle optical part. Examples of the optical part include a lens, a liquid crystal display member, and the like. Examples of the vehicle optical part include an automobile headlight cover, a gauge cover, a sunroof, and the like.

The methacrylic ester polymer (A) used in the present invention is obtained by polymerizing, in at least one step, a monomer mixture containing 50 to 99 wt% of alkylester methacrylate serving as the repeating unit represented by General Formula (2), 0 to 49 wt% of alkylester acrylate serving as the repeating unit represented by General Formula (2), and 1 to 50 wt% of the repeating unit represented by General Formula (3). More preferably, the monomer mixture contains 60 to 99 wt% of alkylester methacrylate serving as the repeating unit represented by General Formula (2), 0 to 39 wt% of alkylester acrylate serving as the repeating unit represented by General Formula (2), and 1 to 40 wt% of the repeating unit represented by General Formula (3). In case where the content of alkylester acrylate exceeds 49 wt%, the chemical resistance, heat resistance, and hardness of a film which can be constituted of the finally obtained imidized methacrylic resin composition tend to be decrease. In case where the content of the repeating unit represented by General Formula (3) exceeds 50 wt%, an imidization ratio necessary for expressing a low orientation birefringence increases, and the transparency and workability (bending resistance) of the finally obtained film tend to deteriorate. In case where the content of the repeating unit represented by General Formula (3) is less than 1 wt%, the imidization ratio necessary for expressing the low orientation birefringence decreases, and the heat resistance of the finally obtained film tends to decrease.

In terms of polymerization reactivity and cost, the alkylester methacrylate constituting the methacrylic ester polymer (A) of the present invention has an unbranched or branched alkyl group containing 1 to 12 carbon atoms. Specific examples of the alkylester methacrylate include methyl methacrylate, ethyl methacrylate, propyl methacrylate, n-butyl methacrylate, isobutyl methacrylate, and t-butyl methacrylate. These monomers may be independently used. Alternatively, a combination of two or more of them may be used.

In terms of polymerization reactivity and cost, the alkylester acrylate constituting the ester methacrylate polymer (A) of the present invention has an unbranched or branched alkyl group containing 1 to 12 carbon atoms. Specific examples of the alkylester acrylate include methyl acrylate, ethyl acrylate, propyl acrylate, n-butyl acrylate, isobutyl acrylate, t-butyl methacrylate, acrylate-2-ethylhexyl, and acrylate-2-octyl. These monomers may be independently used. Alternatively, a combination of two or more of them may be used.

Examples of the repeating unit, represented by General Formula (3), which constitutes the methacrylic ester polymer (A) include an aromatic vinyl derivative such as vinyl toluene, vinyl naphthalene, styrene, or a-methylstyrene. These monomers may be independently used. Alternatively, a combination of two or more of them may be used.

Further, when necessary, the methacrylic ester polymer (A) of the present invention may be copolymerized with an ethylene unsaturated monomer copolymerizable with alkylester methacrylate and alkylester acrylate each of which serves as the repeating unit represented by General Formula (2). Examples of the copolymerizable ethylene unsaturated monomer include: vinyl halide such as vinyl chloride or vinyl bromide; vinyl cyanide such as acrylonitrile or methacrylonitrile; vinyl ester such as vinyl formate, vinyl acetate, or vinyl propionate; vinylidene halide such as vinylidene chloride or vinylidene fluoride; acrylic acid and a salt thereof, such as acrylic acid, sodium acrylate, or calcium acrylate; an alkylester acrylate derivative such as β-hydroxyethyl acrylate, dimethylaminoethyl acrylate, glycidyl acrylate, acrylamide, or N-methylol acrylamide; methacrylic acid and a salt thereof, such as methacrylic acid, sodium methacrylate, or calcium methacrylate; a salt of methacrylate acid; and an alkylester methacylate derivative such as methacrylamide, β-hydroxyethyl methacrylate, dimethylaminoethyl methacrylate, or glycidyl methacrylate. These monomers may be independently used. Alternatively, a combination of two or more of them may be used.

The acrylic ester cross-linked elastic particles (B) used in the present invention are obtained by copolymerizing, in at least one step, a mixture of (i) a monomer mixture (b) containing 50 to 100 wt% of alkylester acrylate and 50 to 0 wt% of alkylester methacrylate each of which is represented by General Formula (2) and (ii) a polyfunctional monomer having two or more unconjugated double bonds in each molecule. More preferably, the monomer mixture (b) contains 60 to 100 wt% of alkylester acrylate and 40 to 0 wt% of alkylester methacrylate. In case where the content of alkylester methacrylate exceeds 50 wt%, the secondary workability (bending resistance) of a film that can be constituted of the finally obtained imidized methacrylic resin composition tends to decrease.

Further, when necessary, the acrylic ester cross-linked elastic particles (B) of the present invention may be copolymerized with an ethylene unsaturated monomer copolymerizable with alkylester methacrylate and alkylester acrylate each of which serves as the repeating unit represented by General Formula (2).

In the acrylic ester cross-linked elastic particles (B) of the present invention, the polyfunctional monomer having two or more unconjugated reactive double bonds in each molecule is copolymerized. Therefore, the finally obtained polymer exhibits cross-bridge elasticity. Further, one of the reactive functional groups (double bonds) which has remained unreacted during the polymerization of the acrylic ester cross-linked elastic particles (B) serves as a grafting point such that a certain proportion of the methacrylic ester copolymer (A) is grafted onto the acrylic ester cross-linked elastic particles (B). Accordingly, the acrylic ester cross-linked elastic particles (B) are dispersed discontinuously and evenly in the methacrylic ester copolymer (A).

Examples of the polyfunctional monomer used in the present invention include allyl methacrylate, allyl acrylate, triallyl cyanurate, triallyl isocyanurate, diallyl phthalate, diallyl malate, divinyl adipate, divinylbenzene ethylene glycol dimethacrylate, divinylbenzene ethylene glycol diacrylate, diethylene glycol dimethacrylate, diethylene glycol diacrylate, triethylene glycol dimethacrylate, triethylene glycol diacrylate, trimethylolpropane trimethacrylate, trimethylolpropane triacrylate, tetramethylolmethane tetramethacrylate, tetramethylolmethane tetraacrylate, dipropylene glycol dimethacrylate, and dipropylene glycol diacrylate. These polyfunctional monomers may be independently used alone. Alternatively, a combination of two or more of them may be used.

Specific examples of (i) alkylester acrylate, (ii) alkylester methacrylate and (iii) the copolymerizable ethylene unsaturated monomer each of which is used for the acrylic ester cross-linked elastic particles (B) include monomers used for the methacrylic ester polymer (A).

The methacrylic resin composition (C) used in the present invention is obtained by polymerizing the methacrylic ester polymer (A) in the presence of the acrylic ester cross-linked elastic particles (B).

A method for producing the methacrylic resin composition (C) used in the present invention is not particularly limited. Applicable examples of the method include a publicly-known method such as an emulsion polymerization method, an emulsion-suspension polymerization method, a suspension polymerization method, a mass polymerization method, and a solution polymerization method. Particularly, the emulsion polymerization method is preferable.

As an initiator for initiating the polymerization of the acrylic ester cross-linked elastic particles (B) and the methacrylic ester polymer (A), a publicly-known initiator such as an organic peroxide, an inorganic peroxide, or an azo compound can be used. Specific examples of the initiator include: an organic peroxide such as t-butylhydroperoxide, 1,1,3,3-tetramethylbutylhydroperoxide, peroxide succinate, peroxy maleic acid t-butyl ester, cumene hydroperoxide, or benzoilperoxide; an inorganic peroxide such as potassium persulfate or sodium persulfate; and an oil-soluble initiator such as azobisisobuylonitrile. These initiators may be independently used. Alternatively, a combination of two or more of them may be used. Each of these initiators may be combined with a reducing agent such as sodium sulfite, sodium thiosulfate, sodium formaldehyde sulfoxylate, ascorbic acid, hydroxy acetonic acid, ferrous sulfide, or a complex of ferrous sulfide and ethylenediamine tetraacetic acid disodium salt so as to be used as a normal redox initiator.

The organic peroxide can be added by using a publicly-known addition method. Examples of the addition method include: (i) a method for adding the organic peroxide directly to the polymer; (ii) a method for adding, to the polymer, the organic peroxide mixed with a monomer; and (iii) a method for adding, to the polymer, the organic peroxide dispersed in an aqueous solution of an emulsifying agent. In terms of transparency, the method (ii) or (iii) is preferable.

Further, in terms of polymerization stability and particle size control, the organic peroxide is preferably combined with (i) an inorganic reducing agent such as a bivalent iron salt and/or (ii) an organic reducing agent such as sodium formaldehydesulfoxylate, a reducing sugar, or ascorbic acid so as to be used as a redox initiator.

A surfactant used for the emulsion polymerization is not particularly limited as long as it is a surfactant used for normal emulsion polymerization. Specific examples of the surfactant include: an anionic surfactant such as sodium alkylsulfonate, sodium alkylbenzenesulfonate, sodium dioctylsulfosuccinate, or sodium lauryl sulfate; and a nonionic surfactant such as a reaction product obtained by allowing (i) either alkylphenol or aliphatic alcohol to react with (ii) either propyleneoxide or ethyleneoxide. These surfactants may be independently used. Alternatively, a combination of two or more of them may be used. When further necessary, a cationic surfactant such as an alkylamine salt may be used.

The methacrylic resin composition (C) latex thus obtained can be separated and collected either by normal coagulation, rinsing, and drying, or by such a process as spray drying or freeze-drying.

The imidized methacrylic resin composition of the present invention can be obtained by imidizing the methacrylic

resin composition (C) with the use of a publicly-known technique.

That is, the imidized methacrylic resin composition of the present invention is obtained by reacting the methacrylic resin composition (C) in a melt state with an imidization agent with the use of an extruder or the like (melt kneading method). Alternatively, the imidized methacrylic resin composition of the present invention is obtained by (i) dissolving the methacrylic resin composition (C) in an unreactive solvent which is unreactive in an imidization reaction and then (b) adding the imidization agent to the methacrylic resin composition

(C) thus dissolved (batch reaction).

Examples of the extruder used in the present invention include a single-screw extruder, a twin-screw extruder, and a multiaxial extruder. Particularly, the twin-screw extruder is preferably used as an extruder capable of promoting mixture of the imidization agent and the methyl methacrylate-styrene copolymer (methacrylic resin composition (C)). Types of the twin-screw extruder include a non-intermeshing co-rotating type, an intermeshing co-rotating type, a non-intermeshing counter-rotating type, and an intermeshing counter-rotating type. Among these types of the twin-screw extruder, the intermeshing co-rotating type is preferable because it is capable of rotating at a high speed and promoting mixture of the imidization agent and the methyl methacrylate-styrene copolymer (methacrylic resin composition (C)). These extruders may be independently used, or may be serially connected to each other.

According to the present invention, the imidization is carried out in the extruder as follows. That is, for example, the methacrylic resin composition (C) serving as a raw material is fed through a material feeding section of the extruder, and then is melted such that a cylinder of the extruder is fully charged with the resin thus melted. Thereafter, the imidization agent is injected through an addition pump into the extruder such that the imidization reaction is allowed to proceed in the extruder.

According to the present invention, while the imidization is carried out in the extruder, the temperature of a reaction zone of the extruder (resin temperature) is preferably set at 180˚C to 270˚C, more preferably 200˚C to 250˚C. In case where the temperature of the reaction zone (resin temperature) is less than 180˚C, the imidization reaction hardly proceeds. Accordingly, the chemical resistance and heat resistance of the finally obtained imidized methacrylic resin composition tend to decrease. In case where the temperature of the reaction zone exceeds 270˚C, the resin remarkably degrades. Accordingly, the bending resistance of a film that can be constituted of the finally obtained imidized methacrylic resin composition tends to decrease. Here, the reaction zone of the extruder refers to a region which is included in the cylinder of the extruder and which extends from (i) a position in which the imidization agent is injected to (ii) a resin discharge vent (die section).

The imidization is allowed to proceed by causing the reaction to occur for a longer period of time in the reaction zone of the extruder. It is preferable to cause the reaction to occur in the reaction zone of the extruder for more than 10 seconds, more preferably more than 30 seconds The imidization hardly proceed when the reaction is caused to occur for 10 seconds or shorter.

The resin pressure of the extruder normally ranges from atmospheric pressure to 50 MPa, preferably from 1 MPa to 30 MPa. In case where the resin pressure is 1 MPa or lower, the imidization agent becomes less soluble. Accordingly, the reaction tends to be inhibited from proceeding. Further, a normal extruder cannot withstand a pressure of 30 MPa or higher.

Further, the extruder used in the present invention is preferably provided with a vent capable of so reducing pressure to atmospheric pressure or less as to remove (i) an unreacted portion of the imidization agent and (ii) a by-product.

Instead of the extruder, for example, a reactor capable of handling high viscosity can be suitably used for the imidization of the present invention. Examples of the reactor include a horizontal biaxial reactor (Bibolac; manufactured by Sumitomo Heavy Industries, Ltd.) and a vertical biaxial stirring vessel (Superblend; manufactured by Sumitomo Heavy Industries, Ltd.)

A batch reaction vessel (pressure container) used in the batch reaction of the present invention is not particularly limited as long as it has such a structure that a solution in which the methyl methacrylate-styrene copolymer is dissolved can be heated and stirred and that the imidization agent can be added to the solution. However, because the viscosity of the polymer solution may increase as the reaction proceeds, it is preferable to use a batch reaction vessel achieving good stirring efficiency. An example of the batch reaction vessel is a Maxbelnd manufactured by Sumitomo Heavy Industries, Ltd. Examples of the unreactive solvent which is unreactive in the imidization reaction include: an aliphatic alcohol such as methyl alcohol, ethyl alcohol, propyl alcohol, isopropyl alcohol, butyl alcohol, or isobutyl alcohol; and benzene, toluene, xylene, chlorobenzene, chlorotoluene and an ether compound. These solvents may be independently used. Alternatively, a combination of two or more of them may be used. Among them, toluene and a mixed solvent of toluene and methyl alcohol are preferable.

The imidization agent used in the present invention is not limited as long as it is capable of imidizing the methacrylic resin composition (C). Examples of the imidization agent include (i) an amine having an aliphatic hydrocarbon

group, (ii) an amine having an aromatic hydrocarbon group, and (iii) an amine having an alicyclic hydrocarbon group. Examples of the amine (i) includes ammonia, methylamine, ethylamine, n-propylamine, i-propylamine, n-butylamine, i-butylamine, t-butylamine, n-hexylamine, and the like. Examples of the amine (ii) include aniline, toluidine, trichloroaniline, and the like. Examples of the amine (iii) include cyclohexylamine and the like. Further, a urea compound which produces these types of amine when heated can be used. Examples of the urea compound include urea, 1,3-dimethylurea, 1,3-diethylurea, and 1,3-dipropylurea. Among these imidization agents, methylamine, cyclohexylamine, and ammonia are preferable in terms of cost and properties. Among these three imidization agents, methylamine is particularly preferable. Further, since methylamine is in a gaseous state at room temperature, it may be dissolved in alcohol such as methanol so as to be used.

In the present invention, the methacrylic resin composition is imidized with the use of the imidization agent at a reaction temperature of preferably 150˚C to 400˚C, more preferably 180˚C to 320˚C, still more preferably 200˚C to 280˚C. This allows the imidization to proceed, and inhibits the resin from being decomposed and colored due to an excessive thermal history.

An amount of the imidization agent added in the present invention is determined depending on the imidization ratio of the imidized methacrylic resin composition for expressing necessary properties.

The imidization ratio of the imidized methacrylic resin composition of the present invention is determined in association with the weight percent of an aromatic vinyl monomer contained in the methacrylic resin composition (C) such that a low orientation birefringence is expressed. That is, when the weight percent of the aromatic vinyl monomer composition contained in the methacrylic resin composition (C) increases, the orientation birefringence of the imidized methacrylic resin composition negatively increases. On the other hand, when the imidization ratio of the methacrylic resin composition (C) increases, the orientation birefringence positively increases. Therefore, the low orientation birefringence of the imidized methacrylic resin composition can be expressed by optimizing (i) the weight percent of the aromatic vinyl monomer composition contained in the methacrylic resin composition and (ii) the imidization ratio of the imidized methacrylic resin composition (C).

The imidization ratio of the imidized methacrylic resin composition preferably ranges from 5% to 95%, more preferably from 5% to 70%. In case where the imidization ratio is less than 5%, the heat resistance of the finally obtained film tends to decrease. In case where the imidization ratio exceeds 95%, the transparency and workability of the finally obtained film tend to deteriorate.

The glass transition temperature of the imidized methacrylic resin composition is preferably 120˚C or higher, more preferably 130˚C or higher. In case where the glass transition temperature is less than 120˚C, the resin is, for example, melted in a hot environment, so that a molded product or film obtained from the resin is likely to be distorted. Therefore, it is harder to obtain a stable optical characteristic. When the methacrylic resin composition (C) is imidized by using the imidization agent, an additive agent may be added to such an extent that the object of the present invention is not missed. Examples of the additive agent include a weather-resistant stabilizer, a catalyst, a plasticizer, a lubricant, an antistatic agent, a colorant, an anti-contraction agent, and an antibacterial deodorizer. Examples of the weather-resistant stabilizer include a widely used antioxidant, a thermal stabilizer, a light stabilizer, an ultraviolet absorber, and a radical trapping agent. These additive agents may be independently used. Alternatively, a combination of two or more of them may be used. Further, these additive agents can also be used for molding and processing the imidized methacrylic resin composition.

The imidized methacrylic resin composition of the present invention is characterized by having substantially no orientation birefringence. The orientation birefringence refers to a double refraction expressed when the molded product obtained from the imidized methacrylic resin composition is drawn at a predetermined temperature and a predetermined draw ratio. In this specification, unless otherwise noted, the orientation birefringence refers to a double refraction expressed when the molded product obtained from the imidized methacrylic resin composition is drawn at a draw ratio of 100% and a temperature 5˚C higher than the glass transition temperature of the imidized methacrylic resin composition.

In the present invention, the orientation birefringence preferably ranges from $-0.1\times10^{-3}$ to $0.1\times10^{-3}$, more preferably from of $-0.01\times10^{-3}$ to $0.01\times10^{-3}$. When the imidized methacrylic resin composition having an orientation birefringence falling outside the range is molded and processed, the imidized methacrylic resin composition is likely to have a double refraction with respect to an environmental change such as a stress change and a temperature change. Accordingly, it is harder to obtain a stable optical characteristic.

The imidized methacrylic resin composition obtained in the present invention can be molded into various molded products by using various plastic processing methods such as an injection molding method, an extrusion molding method, a blow molding method, and a compression molding method.

The imidized methacrylic resin composition obtained in the present invention is useful particularly as a film. For example, the imidized methacrylic resin composition can be processed into the film more satisfactorily by using (i) a normal melt extrusion method such as an inflation method or a T-die extrusion method, (ii) a calendar method, (iii) a solution cast method, or (iv) the like. Further, when necessary, the film is constituted of the imidized methacrylic resin

composition while both sides of the film are brought into contact with a roll or a metal belt, especially with a roll or a metal belt heated to a temperature higher than the glass transition temperature. In this way, a film having a better surface property can be obtained. Further, in some applications, the film can be laminated so as to be molded, or can be biaxially stretched so as to be modified.

Further, when necessary, the methacrylic resin composition (C) of the present invention may be blended with polyglutarimide, an glutaric anhydride polymer, a lactone cyclization methacrylic resin, a methacrylic resin, a styrene resin, a methyl methacrylate-styrene copolymer, a polyethylene terephthalate resin, a polybutylene terephthalate resin, or the like. The method for blending is not particularly limited, and a publicly-known method can be used.

The film obtained from the imidized methacrylic resin composition of the present invention can be laminated on metal, plastic, or the like so as to be used. Examples of a method for laminating the film on the metal include a wet laminating method, a dry laminating method, an extrusion laminating method, and a hot melt laminating method. In the wet laminating method, the film is placed on a metal plate to which an adhesive has been applied, and then the adhesive is dried.

Examples of a method for laminating the film on a plastic part include a film insert molding method, a laminate injection press molding method, and a film in-mold molding method. In the film insert molding method, the film is put in a metal mold, and then the metal mold is filled with resin by way of injection molding. In the film in-mold molding method, the film is preformed and then put in the metal mold, and then the metal mold is filled with resin by way of injection molding.

The molded product obtained from the imidized methacrylic resin composition of the present invention is applicable, for example, to: an imaging field such as a lens, a finder, a filter, a prism, a Fresnel lens, and the like for a camera, a VTR, and a projector; a lens field such as an optical disc pickup lens for a CD player, a DVD player, an MD player, and the like; an optical disk recording field such as a CD player, a DVD player, an MD player, and the like; an information device field such as (i) a liquid crystal display film such as a liquid crystal optical waveguide, a polarizer-protective film, a retardation film, and the like, and (ii) a surface protective film; an optical communication field such as an optical fiber, an optical switch, an optical connector, and the like; an automobile field such as an automobile headlight, an automobile rear light, an automobile inner lens, an automobile gauge cover, an automobile sunroof, and the like; a medical instrument field such as an eyeglass, a contact lens, an endoscope lens, a medical kit requiring sterilization, and the like; a construction/building material field such as a road photic plate, a double glass lens, a transom window, a carport, an illumination lens, an illumination cover, a construction siding board, and the like; a microwave oven cooking container (food vessel); a home electric appliance housing; a toy; a sunglass; a stationery; and the like. On the other hand, a laminated product made of the film obtained from the imidized methacrylic resin composition of the present invention can be applied to: automobile interior and exterior materials; miscellaneous daily goods; wallpapers; alternative coating materials; housings for a piece of furniture and an electrical device; housings for office automation equipment such as a facsimile; floor materials; parts for electrical and electronic devices; bathroom fitments; and the like.

The present invention is not limited to the description of the embodiments above, but may be altered by a skilled person within the scope of the claims. An embodiment based on a proper combination of technical means disclosed in different embodiments is encompassed in the technical scope of the present invention.

[Examples]

In the following, the present invention will be explained more specifically with reference to Examples and Comparative Examples. However, the present invention is not limited to them.

[Example: Imide resin]

In Examples 1 to 14 and Comparative Examples 1 and 2 below, the properties of each of the products ((i) imide resins and (ii) films respectively obtained from the imide resins) were measured in the following manners.

(1) Measurement of an imidization ratio

An IR spectrum of the pellet of the product was measured at room temperature with the use of a TravelIR (manufactured by SensIR Technologies). In the IR spectrum thus obtained, an absorbance at 1720 $cm^{-1}$ and an absorbance at 1660 $cm^{-1}$ were observed. The absorbance at 1720 $cm^{-1}$ is assigned to estercarbonyl groups, and the absorbance at 1660 $cm^{-1}$ is assigned to imidecarbonyl groups. The imidization ratio was calculated in accordance with the ratio of (i) the absorbance at 1720 $cm^{-1}$ to (ii) the absorbance at 1660 $cm^{-1}$. As the term is used herein, the "imidization ratio" refers to the proportion of the imidecarbonyl groups in the whole carbonyl groups.

(2) Styrene content

A solution was prepared by dissolving 10 mg of the product in 1 g of $CDCl_3$. A $^1$H-NMR of the solution thus prepared was measured at room temperature with the use of an NMR measurement apparatus (Gemini-300; manufactured by Varian Inc.). In the spectrum thus obtained, an integrated intensity assigned to aromatic protons and an integrated intensity assigned to aliphatic protons were observed. The styrene content was determined in accordance with the ratio of (i) the integrated intensity assigned to the aromatic protons to (ii) the integrated intensity assigned to the aliphatic protons.

(3) Glass transition temperature (Tg)

A 10 mg sample was taken from the product. The sample was measured with the use of a differential scanning calorimeter (DSC-50; manufactured by Shimazu Corporation) at a heating rate of 20˚C/min in an atmosphere of nitrogen. In accordance with the measurement results, the glass transition temperature of the sample was determined using the midpoint method.

(4) Total light transmittance

A solution having a resin concentration of 25 wt% was prepared by dissolving the imide resin in methylene chloride. The solution thus prepared was applied onto a PET film, and then was dried. As a result, a film was produced. From the film thus obtained, a test piece with the dimensions of 50 mm × 50 mm was cut out. The total light transmittance of the test piece was measured with the use of a turbidimeter (300A; manufactured by Nippon Denshoku Industry Co., Ltd.) at a temperature of 23±2˚C and a humidity of 50±5%. The measurement was carried out in conformity to JIS K7105.

(5) Turbidity

The turbidity of the test piece obtained in Section (4) was measured with the use of the turbidimeter (300A manufactured by Nippon Denshoku Industry Co., Ltd.) at a temperature of 23±2˚C and a humidity of 50±5%. The measurement was carried out in conformity to JIS K7136.

(6) Orientation birefringence

From the film produced in Section (4), a sample having a width of 50 mm and a length of 150 mm was cut out. The sample was drawn at a draw ratio of 100% at a temperature 5˚C higher than the glass transition temperature. As a result, a drawn film was produced. From a transversely central portion of the uniaxially double drawn film, a test piece with the dimensions of 3.5 cm × 3.5 cm was cut out. The phase difference of the test piece was measured with the use of KOBRA-21ADH (manufactured by Oji Scientific Instruments) at a temperature of 23±2˚C and a humidity of 50±5% by using a light ray having a wavelength of 590 nm and an incidence angle of 0˚. Then, the thickness of the test piece was measured with the use of a digimatic indicator (manufactured by Mitutoyo Corporation) at a temperature of 23±2˚C and a humidity of 60±5%. The orientation birefringence was obtained by dividing the phase difference by the thickness.

(7) Melt viscosity

The melt viscosity was obtained by carrying out measurement using a capillary rheometer at a temperature of 260˚C with a shearing rate of 122 $sec^{-1}$.

(Example 1)

An imide resin was produced by imidizing (i) a commercially available methyl methacrylate-styrene copolymer (Estyrene MS-800; manufactured by Nippon Steel Chemical Co., Ltd.) with the use of (ii) monomethylamine serving as an imidization agent. The extruder used herein is an intermeshing co-rotating type twin-screw extruder having a bore diameter of 15 mm. The temperature of temperature control zones of the extruder was set at 230˚C. The screw rotation speed was set at 300 rpm. The poly(methyl methacrylate)-styrene copolymer was fed to the extruder at a feed rate of 1 kg/hr, and monomethylamine was fed in 30 parts by weight of the poly(methyl methacrylate)-styrene copolymer. The poly(methyl methacrylate)-styrene copolymer was fed through a hopper of the extruder, and was melted in a kneading block of the extruder such that the kneading block was fully charged with the resin thus melted. Thereafter, monomethylamine was injected through a nozzle of the extruder. A seal ring was placed in an end of the reaction zone such that the reaction zone was fully charged with the resin. After the reaction, a by-product and an excess of methylamine were

volatilized while reducing the pressure exerted on a vent of the extruder to -0.02 MPa. The imide resin was extruded through a die provided at an exit of the extruder, so as to be shaped into a strand. The imide resin thus extruded was cooled down in a water tank, and then was pelletized by a pelletizer.

Table 1 shows the imidization ratio, glass transition temperature, and styrene content of the imide resin thus obtained. Fig. 1 shows the IR spectrum of the imide resin. Further, the imide resin has a melt viscosity of 16000 poise.

Further, Table 2 shows the total light transmittance, turbidity, and orientation birefringence of a film obtained from the imide resin. (Example 2)

In Example 2, the same operations were carried out as in Example 1, except that the methyl methacrylate-styrene copolymer was fed at a feed rate of 0.75 kg/hr and monomethylamine was fed in 40 parts by weight of the methyl methacrylate-styrene copolymer.

Table 1 shows the imidization ratio, glass transition temperature, and styrene content of the imide resin thus obtained.

Further, Table 2 shows the total light transmittance, turbidity, and orientation birefringence of a film obtained from the imide resin.

(Example 3)

In Example 3 , the same operations were carried out as in Example 1, except that the methyl methacrylate-styrene copolymer was fed at a feed rate of 0.5 kg/hr and monomethylamine was fed in 40 parts by weight of the methyl methacrylate-styrene copolymer.

Table 1 shows the imidization ratio, glass transition temperature, and styrene content of the imide resin thus obtained.

Further, Table 2 shows the total light transmittance, turbidity, and orientation birefringence of a film obtained from the imide resin.

(Example 4)

In a 200 ml pressure-resistant container (TEM-V1000N; manufactured by Taiatsu Techno Corporation), 100 parts by weight of a commercially available methyl methacrylate-styrene copolymer (Estyrene MS-800; manufactured by Nippon Steel Chemical Co., Ltd.) was dissolved in a solution containing (i) 100 parts by weight of toluene and (ii) 10 parts by weight of methanol. As a result, a reaction solution was obtained. The container containing the reaction solution thus obtained was immersed in a mixed solution of dry ice and methanol so that the reaction solution was cooled down. To the reaction solution thus cooled down, 40 parts by weight of monomethylamine was added. Thereafter, the reaction solution was allowed to react with monomethylamine at 230˚C for 2.5 hours. As a result, a reaction mixture was obtained. The reaction mixture thus obtained was cooled down. Thereafter, the reaction mixture was dissolved in methylene chloride, and then the imide resin was deposited from the reaction mixture by using methanol. As a result, a product was obtained. The product thus obtained was collected.

The imide resin thus obtained has an imidization ratio of 66%, a glass transition temperature of 151 ˚C, and a styrene content of 20%.

Further, Table 2 shows the total light transmittance, turbidity, and orientation birefringence of a film obtained from the imide resin.

(Example 5)

In Example 5, the same operations were carried out as in Example 1, except that the methyl methacrylate-styrene copolymer was fed at a feed rate of 1 kg/hr and monomethylamine was fed in 20 parts by weight of the methyl methacrylate-styrene copolymer.

Table 1 shows the imidization ratio, glass transition temperature, and styrene content of the imide resin thus obtained.

Further, Table 2 shows the total light transmittance, turbidity, and orientation birefringence of a film obtained from the imide resin.

(Example 6)

An imide resin was produced by imidizing (i) a commercially available methyl methacrylate-styrene copolymer (Estyrene MS-800; manufactured by Nippon Steel Chemical Co., Ltd.) with the use of (ii) monomethylamine serving as an imidization agent. The extruder used herein is an intermeshing co-rotating type twin-screw extruder having a bore diameter of 15 mm. The temperature of temperature control zones of the extruder was set at 230˚C. The screw rotation

speed was set at 300 rpm. The poly(methyl methacrylate)-styrene copolymer was fed to the extruder at a feed rate of 1 kg/hr, and monomethylamine was fed in 20 parts by weight of the poly(methyl methacrylate)-styrene copolymer. The poly(methyl methacrylate)-styrene copolymer was fed through a hopper of the extruder, and was melted in a kneading block of the extruder such that the kneading block was fully charged with the resin thus melted. Thereafter, monomethylamine was injected through a nozzle of the extruder. A seal ring was placed in an end of the reaction zone such that the reaction zone was fully charged with the resin. After the reaction, a by-product and an excess of methylamine were volatilized while reducing the pressure exerted on a vent of the extruder to -0.02 MPa. The imide resin was extruded through a die provided at an exit of the extruder, so as to be shaped into a strand. The imide resin thus extruded was cooled down in a water tank, and then was pelletized by a pelletizer. Table 1 shows the imidization ratio, glass transition temperature, and styrene content of the imide resin thus obtained.

Further, Table 2 shows the total light transmittance, turbidity, and orientation birefringence of a film obtained from the imide resin.

(Example 7)

In Example 7, the same operations were carried out as in Example 6, except that monomethylamine was fed in 40 parts by weight of the poly(methyl methacrylate)-styrene copolymer.

Table 1 shows the imidization ratio, glass transition temperature, and styrene content of the imide resin thus obtained.

Further, Table 2 shows the total light transmittance, turbidity, and orientation birefringence of a film obtained from the imide resin. (Example 8)

In Example 8, the same operations were carried out as in Example 6, except that the methyl methacrylate-styrene copolymer was fed at a feed rate of 0.75 kg/hr and monomethylamine was fed in 30 parts by weight of the methyl methacrylate-styrene copolymer.

Table 1 shows the imidization ratio, glass transition temperature, and styrene content of the imide resin thus obtained.

Further, Table 2 shows the total light transmittance, turbidity, and orientation birefringence of a film obtained from the imide resin. (Example 9)

In Example 9, the same operations were carried out as in Example 6, except that the methyl methacrylate-styrene copolymer was fed at a feed rate of 0.5 kg/hr and monomethylamine was fed in 30 parts by weight of the methyl methacrylate-styrene copolymer.

Table 1 shows the imidization ratio, glass transition temperature, and styrene content of the imide resin thus obtained. Fig. 2 shows an IR spectrum of the imide resin.

Further, Table 2 shows the total light transmittance, turbidity, and orientation birefringence of a film obtained from the imide resin. (Example 10)

In Example 10, the same operations were carried out as in Example 6, except that (i) Atrate® MS Resin MM-70 (manufactured by Nippon A&L Inc.) was used as the methyl methacrylate-styrene copolymer, that (ii) the methyl methacrylate-styrene copolymer was fed at a feed rate of 0.75 kg/hr, and that (iii) monomethylamine was fed in 40 parts by weight of the methyl methacrylate-styrene copolymer.

Table 1 shows the imidization ratio, glass transition temperature, and styrene content of the imide resin thus obtained.

Further, Table 2 shows the total light transmittance, turbidity, and orientation birefringence of a film obtained from the imide resin.

(Example 11)

In Example 11, the same operations were carried out as in Example 10, except that the methyl methacrylate-styrene copolymer was fed at a feed rate of 0.5 kg/hr.

Table 1 shows the imidization ratio, glass transition temperature, and styrene content of the imide resin thus obtained.

Further, Table 2 shows the total light transmittance, turbidity, and orientation birefringence of a film obtained from the imide resin.

(Example 12)

In a 200 ml pressure-resistant container (TEM-V1000N; manufactured by Taiatsu Techno Corporation), 100 parts by weight of a commercially available methyl methacrylate-styrene copolymer (Estyrene MS-600; manufactured by Nippon Steel Chemical Co., Ltd.) was dissolved in a solution containing (i) 100 parts by weight of toluene and (ii) 10

parts by weight of methanol. As a result, a reaction solution was obtained. The container containing the reaction solution thus obtained was immersed in a mixed solution of dry ice and methanol so that the reaction solution was cooled down. To the reaction solution thus cooled down, 30 parts by weight of monomethylamine was added. Thereafter, the reaction solution was allowed to react with monomethylamine at 230˚C for 2.5 hours. As a result, a reaction mixture was obtained. The reaction mixture thus obtained was cooled down. Thereafter, the reaction mixture was dissolved in methylene chloride, and then the imide resin was deposited from the reaction mixture by using methanol. As a result, a product was obtained. The product thus obtained was collected.

The imide resin thus obtained has an imidization ratio of 56%, a glass transition temperature of 131˚C, and a styrene content of 40%.

Further, Table 2 shows the total light transmittance, turbidity, and orientation birefringence of a film obtained from the imide resin.

(Example 13)

Methyl methacrylate (90 wt%) and styrene (10 wt%) were polymerized by way of mass polymerization. As a result, a methyl methacrylate-styrene copolymer was obtained. An imide resin was produced by imidizing (i) the so-obtained methyl methacrylate-styrene copolymer with the use of (ii) monomethylamine serving as an imidization agent. The extruder used herein is an intermeshing co-rotating type twin-screw extruder having a bore diameter of 15 mm. The temperature of temperature control zones of the extruder was set at 230˚C. The screw rotation speed was set at 300 rpm. The poly(methyl methacrylate)-styrene copolymer was fed to the extruder at a feed rate of 1 kg/hr, and monomethylamine was fed in 40 parts by weight of the poly(methyl methacrylate)-styrene copolymer. The poly(methyl methacrylate)-styrene copolymer was fed through a hopper of the extruder, and was melted in a kneading block of the extruder such that the kneading block was fully charged with the resin thus melted. Thereafter, monomethylamine was injected through a nozzle of the extruder. A seal ring was placed in an end of the reaction zone such that the reaction zone was fully charged with the resin. After the reaction, a by-product and an excess of methylamine were volatilized while reducing the pressure exerted on a vent of the extruder to -0.02 MPa. The imide resin was extruded through a die provided at an exit of the extruder, so as to be shaped into a strand. The imide resin thus extruded was cooled down in a water tank, and then was pelletized by a pelletizer.

Table 1 shows the imidization ratio, glass transition temperature, styrene content, total light transmittance, turbidity, and orientation birefringence of the imide resin thus obtained. Fig. 1 shows the IR spectrum of the imide resin.

Further, Table 2 shows the total light transmittance, turbidity, and orientation birefringence of a film obtained from the imide resin.

(Example 14)

Methyl methacrylate (90 wt%) and styrene (10 wt%) were polymerized by way of mass polymerization. As a result, a methyl methacrylate-styrene copolymer was obtained. By using a 200 ml pressure-resistant container (TEM-V1000N; manufactured by Taiatsu Techno Corporation), 100 parts by weight of the copolymer was dissolved in a solution containing (i) 100 parts by weight of toluene and (ii) 10 parts by weight of methanol. The container containing the reaction solution thus obtained was immersed in a mixed solution of dry ice and methanol so that the reaction solution was cooled down. To the reaction solution thus cooled down, 40 parts by weight of monomethylamine was added. Thereafter, the reaction solution was allowed to react with monomethylamine at 230˚C for 2.5 hours. As a result, a reaction mixture was obtained. The reaction mixture thus obtained was cooled down. Thereafter, the reaction mixture was dissolved in methylene chloride, and then the imide resin was deposited from the reaction mixture by using methanol. As a result, a product was obtained. The product thus obtained was collected.

The imide resin thus obtained has an imidization ratio of 67%, a glass transition temperature of 158˚C, and a styrene content of 10%.

Further, Table 2 shows the total light transmittance, turbidity, and orientation birefringence of a film obtained from the imide resin.

(Comparative Example 1)

Table 2 shows the total light transmittance, turbidity, orientation birefringence of a film obtained from a commercially available methyl methacrylate-styrene copolymer (Estyrene MS-600; manufactured by Nippon Steel Chemical Co., Ltd). Estyrene MS-600 has a glass transition temperature of 107˚C and a styrene content of 40%.

(Comparative Example 2)

Table 2 shows the total light transmittance, turbidity, orientation birefringence of a film obtained from a commercially available methyl methacrylate-styrene copolymer (Estyrene MS-800; manufactured by Nippon Steel Chemical Co., Ltd). Estyrene MS-800 has a glass transition temperature of 113˚C and a styrene content of 20%.

[Table 1]

| | Resin feed rate (kg/hr) | Amount of amine (parts by weight) | Imidization ratio (%) | Tg (˚C) | Styrene content (%) |
|---|---|---|---|---|---|
| Example 1 | 1 | 30 | 68 | 154 | 20 |
| Example 2 | 0.75 | 40 | 69 | 158 | 20 |
| Example 3 | 0.5 | 40 | 72 | 166 | 20 |
| Example 5 | 1 | 20 | 65 | 142 | 20 |
| Example 6 | 1 | 20 | 45 | 124 | 40 |
| Example 7 | 1 | 40 | 58 | 131 | 40 |
| Example 8 | 0.75 | 30 | 62 | 137 | 40 |
| Example 9 | 0.5 | 30 | 66 | 149 | 40 |
| Example 10 | 0.75 | 40 | 51 | 128 | 30 |
| Example 11 | 0.5 | 40 | 59 | 133 | 30 |
| Example 13 | 1 | 40 | 70 | 160 | 10 |

[Table 2]

| | Total light transmittance | Turbidity (%) | Orientation birefringence |
|---|---|---|---|
| | (%) | | ($\times 10^{-3}$) |
| Example 1 | 91.7 | 0.8 | -0.021 |
| Example 2 | 91.8 | 0.4 | 0.002 |
| Example 3 | 91.6 | 0.9 | 0.020 |
| Example 4 | 91.4 | 0.2 | -0.040 |
| Example 5 | 91.9 | 0.6 | -0.185 |
| Example 6 | 92.0 | 0.9 | -2.261 |
| Example 7 | 92.0 | 0.4 | -1.748 |
| Example 8 | 91.9 | 0.6 | -1.493 |
| Example 9 | 92.1 | 0.8 | -1.007 |
| Example 10 | 91.9 | 0.1 | -2.180 |
| Example 11 | 91.9 | 0.2 | -1.700 |
| Example 12 | 91.0 | 0.6 | -3.702 |
| Example 13 | 90.5 | 0.8 | 2.571 |
| Example 14 | 91.2 | 0.7 | 1.562 |
| Comparative Example 1 | 92.1 | 0.7 | -4.653 |
| Comparative Example 2 | 92.8 | 0.8 | -2.048 |

(Example: Polarizer-protective film)

In Examples 15 to 19 and Comparative Examples 3 to 6 below, the properties of each of the products ((i) imide resins and (ii) films respectively obtained from the imide resins) were measured in the following manners.

(1) Glass transition temperature

A sample having a weight of approximately 5 mg was taken from the product. The sample was measured with the use of a DSC measurement apparatus (manufactured by Shimazu Corporation) while the temperature was allowed to rise from 20˚C to 250˚C at a heating rate of 20˚C/min. In accordance with the measurement results, the glass transition temperature of the product was calculated by using the midpoint method.

(2) Imidization ratio

A TravelIR measurement apparatus (manufactured by SensIR Technologies) was used. The imidization ratio was calculated in accordance with the ratio of (i) an absorbance at approximately 1720 $cm^{-1}$ to (ii) an absorbance at 1660 $cm^{-1}$. The absorbance at 1720 $cm^{-1}$ is derived from estercarbonyl groups, and the absorbance at 1660 $cm^{-1}$ is derived from imidecarbonyl groups. As the term is used herein, the "imidization ratio" refers to the proportion of the imidecarbonyl groups in the whole carbonyl groups.

(3) Styrene content

An NMR measurement apparatus (Gemini-300; manufactured by Varian Inc.) was used. The styrene content was determined in accordance with the ratio of (i) an integrated intensity assigned to aromatic protons to (ii) an integrated intensity assigned to aliphatic protons.

(4) Solvent resistance

A pellet having a weight of approximately 0.4 g was obtained from the imide resin. The pellet thus obtained was immersed in 2 mL of toluene. After 24 hours, a change in the shape of the pellet was checked with eyes.

(5) Film thickness

From the film, a test piece with the dimensions of 10 mm $\times$ 150 mm was cut out. Five thicknesses of the test pieces were measured with the use of a digimatic indicator (manufactured by Mitutoyo) at a temperature of 23$\pm$2˚C and a humidity of 60$\pm$5%. The film thickness was obtained by averaging the five thicknesses.

(6) Turbidity

From the film, a test piece with the dimensions of 50 mm $\times$ 50 mm was cut out. The turbidity of the test piece was measured with the use of a turbidimeter (NDH-300A; manufactured by Nippon Denshoku Industry Co., Ltd.) at a temperature of 23$\pm$2˚C and a humidity of 50$\pm$5%.

(7) Total light transmittance

The total light transmittance was measured with the use of a turbidimeter (NDH-300A; manufactured by Nippon Denshoku Industry Co., Ltd.). The measurement was carried out by a method described in 5.5 of JIS K7105-1981.

(8) Film strength

From the film, a test piece having a length of 150 mm and a width of 15 mm was cut out. The strength of the test piece was measured with the use of an MIT crease-flex fatigue tester (manufactured by Toyo Seiki Kogyo Co., Ltd.) The measurement was carried out in conformity to JIS C5016.

(9) Photoelastic coefficient

From the film, a test piece with the dimensions of 20 cm $\times$ 1 cm was cut out so as to have a rectangular shape. The photoelastic coefficient of the test piece was measured with the use of a polarization microspectrophotometer (TFM-120ATF-PC; manufactured by ORC Manufacturing Co., Ltd.) at a temperature of 23±2°C and a humidity of 50±5%. The polarization microspectrophotometer was set such that the wavelength was 515 nm. The double refractive index was measured under the following conditions (1) and (2): (1) one end of the film was fixed and the other end of the film was put under no load; and (2) one end of the film was fixed and the other end of the film was put under a 500 g load. In accordance with the results thus obtained, an amount of change in double refractive index with respect to an exerted stress was calculated.

(10) Orientation birefringence

The phase difference was measured with the use of KOBRA-21ADH (manufactured by Oji Scientific Instruments) at a temperature of 23±2°C and a humidity of 50±5% by using a light ray having a wavelength of 590 nm and an incidence angle of 0°. Then, the thickness of the test piece was measured with the use of a digimatic indicator (manufactured by Mitutoyo Corporation) at a temperature of 23±2°C and a humidity of 60±5%. The orientation birefringence was obtained by dividing the phase difference by the thickness.

(Example 15)

An imide resin was produced by imidizing (i) a commercially available methyl methacrylate-styrene copolymer (Estyrene MS-600; manufactured by Nippon Steel Chemical Co., Ltd.) with the use of (ii) monomethylamine serving as an imidization agent. The extruder used herein is an intermeshing co-rotating type twin-screw extruder having a bore diameter of 15 mm. The temperature of temperature control zones of the extruder was set at 230°C. The screw rotation speed was set at 300 rpm. The MS resin was fed to the extruder at a feed rate of 1 kg/hr, and monomethylamine was fed in 30 parts by weight of the MS resin. The MS resin was fed through a hopper of the extruder, and was melted in a kneading block of the extruder such that the kneading block was fully charged with the resin thus melted. Thereafter, monomethylamine was injected through a nozzle of the extruder. A seal ring was placed in an end of the reaction zone such that the reaction zone was fully charged with the resin. After the reaction, a by-product and an excess of methylamine were volatilized while reducing the pressure exerted on a vent of the extruder to -0.02 MPa. The imide resin was extruded through a die provided at an exit of the extruder, so as to be shaped into a strand. The imide resin thus extruded was cooled down in a water tank, and then was pelletized by a pelletizer.

Table 3 shows the imidization ratio, glass transition temperature, and styrene content of the imide resin thus obtained.

The imide resin thus obtained was evaluated for its solvent resistance to toluene. As a result, it was found that the imide resin remained substantially intact although it was slightly swollen.

These results show that the imide resin of the present invention has excellent solvent resistance and therefore is useful as a polarizer-protective film.

Next, the imide resin thus obtained was dissolved in methylene chloride. As a result, a resin solution having a resin concentration of approximately 25% was prepared. The solution thus obtained was applied onto a PET film, and then was dried. As a result, a cast film was obtained.

Table 4 shows the thickness, turbidity, and total light transmittance of the film thus obtained.

These results show that the film thus obtained has good heat-resistance and transparency and therefore is useful as a polarizer-protective film.

The photoelastic coefficient of the imide resin film thus obtained was measured. As a result, the imide resin film was found to have a photoelastic coefficient of $2\times10^{-12}m^2/N$. Similarly, the photoelastic coefficient of a TAC film (manufactured by Fuji Photo Film Co., Ltd.) was measured. As a result, the TAC film was found to have a photoelastic coefficient of $15\times10^{-12}m^2/N$.

These results show that the imide resin film has a small photoelastic coefficient and therefore is useful as a polarizer-protective film.

(Example 16)

In Example 16, the same operations were carried out as in Example 15, except that a commercially available methyl methacrylate-styrene copolymer (Estyrene MS-800; manufactured by Nippon Steel Chemical Co., Ltd.) was used and methylamine was fed in 40 parts by weight of the methyl methacrylate-styrene copolymer.

Table 3 shows the imidization ratio, glass transition temperature, and styrene content of the imide resin thus obtained.

The imide resin thus obtained was processed in the same manner as in Example 15. As a result, a cast film was produced.

Table 4 shows the thickness, turbidity, and total light transmittance of the film thus obtained.

These results show that the film thus obtained has good heat-resistance and transparency and therefore is useful as a polarizer-protective film.

(Example 17)

In Example 17, the same operations were carried out as in Example 16, except that the MS resin was fed at feed rate of 0.75 kg/hr.

Table 1 shows the imidization ratio, glass transition temperature, total light transmittance, and an amount of styrene of the resin thus obtained.

The imide resin thus obtained was processed in the same manner as in Example 15. As a result, a cast film was produced.

Table 4 shows the thickness, turbidity, and total light transmittance of the film thus obtained.

These results show that the film thus obtained has good heat-resistance and transparency and therefore is useful as a polarizer-protective film.

The imide resin film thus obtained was subjected to a crease-flex fatigue test. As a result, it was found that, on an average, the imide resin film endured for 170 stress cycles before breaking. Similarly, a polyglutarimide resin (Pleximide 8805; manufactured by Roehm Inc.) was subjected to a crease-flex fatigue test. As a result, it was found that, on an average, the polyglutarimide resin endured for 8 stress cycles before breaking.

These results show that the film thus obtained has excellent film strength and therefore is useful as a polarizer-protective film.

(Comparative Example 3)

A resin mixture was produced by kneading, with the use of an extruder, a mixture of (i) 62.5 parts by weight of a copolymer (having a N-methylglutarimide content of 75 mol% and a glass-temperature of 115˚C) made up of methyl methacrylate and N-methylglutarimide and (ii) 37.5 parts by weight of an acrylonitrile styrene copolymer having an acrylonitrile content of 28 wt%.

The mixed resin thus obtained was evaluated for its solvent resistance to toluene. As a result, it was found that the mixed resin completely lost its original form although it was not dissolved.

[Table 3]

| | Imidization ratio (%) | Glass transition temperature (˚C) | Styrene content (%) |
|---|---|---|---|
| Example 15 | 58 | 132 | 40 |
| Example 16 | 68 | 150 | 20 |
| Example 17 | 69 | 159 | 20 |

[Table 4]

| | Film thickness (μm) | Turbidity (%) | Total light transmittance (%) |
|---|---|---|---|
| Example 15 | 58 | 0.6 | 91.0 |
| Example 16 | 56 | 0.2 | 91.5 |
| Example 17 | 50 | 0.4 | 91.2 |

(Example 18)

An imide resin was produced by imidizing (i) a commercially available methyl methacrylate-styrene copolymer (Estyrene MS-800; manufactured by Nippon Steel Chemical Co., Ltd.) with the use of (ii) methylamine serving as an imidization agent. The extruder used herein is an intermeshing co-rotating type twin-screw extruder having a bore diameter of 15 mm. The temperature of temperature control zones of the extruder was set at 230˚C. The screw rotation speed was set at 300 rpm. The MS resin was fed to the extruder at a feed rate of 0.75 kg/hr, and methylamine was fed in 40 parts by weight of the MS resin. The MS resin was fed through a hopper of the extruder, and was melted in a kneading block of the extruder such that the kneading block was fully charged with the resin thus melted. Thereafter, methylamine was injected through a nozzle of the extruder. A seal ring was placed in an end of the reaction zone such

that the reaction zone was fully charged with the resin. After the reaction, a by-product and an excess of methylamine were volatilized while reducing the pressure exerted on a vent of the extruder to -0.02 MPa. The imide resin was extruded through a die provided at an exit of the extruder, so as to be shaped into a strand. The imide resin thus extruded was cooled down in a water tank, and then was pelletized by a pelletizer. Table 5 shows the imidization ratio, glass transition temperature, and styrene content of the imide resin thus obtained.

The imide resin thus obtained was evaluated for its solvent tolerance to toluene. As a result, it was found that the imide resin remained substantially intact although it was slightly swollen.

These results show that the imide resin of the present invention has excellent solvent resistance and therefore is useful as a polarizer-protective film.

The imide resin thus obtained was dissolved in methylene chloride. As a result, a resin solution having a resin concentration of approximately 25% was prepared. The solution thus obtained was applied onto a PET film, and then was dried. As a result, a cast film was obtained. Table 6 shows the thickness, turbidity, and total light transmittance of the film thus obtained.

These results show that the film thus obtained has good heat-resistance and transparency and therefore is useful as a polarizer-protective film.

From the film thus obtained, samples each having a width of 50 mm and a length of 150 mm were cut out. A drawn film was produced by stretching one of the samples at a draw ratio of 50% at a temperature 5°C higher than the glass transition temperature. Another drawn film was produced by stretching another one of the samples at a draw ratio of 100% at the same temperature. Table 7 shows the orientation birefringence of each of the drawn films thus obtained.

The photoelastic coefficient of the imide resin film thus obtained was measured. As a result, the imide resin film was found to have a photoelastic coefficient of $1\times10^{-12}m^2/N$. Similarly, the photoelastic coefficient of a TAC film (manufactured by Fuji Photo Film Co., Ltd.) was measured. As a result, the TAC film was found to have a photoelastic coefficient of $15\times10^{-12}m^2/N$.

These results show that the imide resin film has a small photoelastic coefficient and therefore is useful as a polarizer-protective film.

(Example 19)

In Example 19, the same operations were carried out as in Example 18, except that the MS resin was fed at a feed rate of 1.0 kg/hr. Table 5 shows the imidization ratio, glass transition temperature, and styrene content of the imide resin thus obtained.

From the imide resin thus obtained, a cast film was produced in the same manner as in Example 18. Table 6 shows the thickness, turbidity, and total light transmittance of the film thus obtained.

These results show that the film thus obtained has good heat-resistance and transparency and therefore is useful as a polarizer-protective film.

Drawn films were produced in the same manner as in Example 18. Table 7 shows the orientation birefringence of each of the drawn films thus obtained.

(Comparative Example 4)

In Comparative Example 4, the same operations were carried out as in Example 19, except that methylamine was fed in 30 parts by weight of the MS resin. Table 5 shows the imidization ratio, glass transition temperature, and styrene content of the imide resin thus obtained.

From the imide resin thus obtained, a cast film was produced in the same manner as in Example 18. Table 6 shows the thickness, turbidity, and total light transmittance of the film thus obtained.

Drawn films were produced in the same manner as in Example 18. Table 7 shows the orientation birefringence of each of the drawn films thus obtained.

(Comparative Example 5)

In Comparative Example 5, the same operations were carried out as in Example 19, except that a commercially available methyl methacrylate-styrene copolymer (Estyrene MS-600; manufactured by Nippon Steel Chemical Co., Ltd.) was used as the methyl methacrylate-styrene copolymer and methylamine was fed in 30 parts by weight of the methyl methacrylate-styrene copolymer. Table 5 shows the imidization ratio, glass transition temperature, and styrene content of the imide resin thus obtained.

From the imide resin thus obtained, a cast film was produced in the same manner as in Example 18. Table 6 shows the thickness, turbidity, and total light transmittance of the film thus obtained.

Drawn films were produced in the same manner as in Example 18. Table 7 shows the orientation birefringence

of each of the drawn films thus obtained.

(Comparative Example 6)

A resin mixture was produced by kneading, with the use of an extruder, a mixture of (i) 62.5 parts by weight of a copolymer (having a N-methylglutarimide content of 75 mol% and a glass-temperature of 155˚C) made up of methyl methacrylate and N-methylglutarimide and (ii) 37.5 parts by weight of an acrylonitrile styrene copolymer having an acrylonitrile content of 28 wt%. The resin mixture thus obtained has a glass transition temperature of 131˚C.
The mixed resin thus obtained was evaluated for its solvent resistance to toluene. As a result, it was found that the mixed resin completely lost its original form although it was not dissolved.

[Table 5]

| | Imidization ratio (%) | Glass transition temperature (˚C) | Styrene content (%) |
|---|---|---|---|
| Example 18 | 69 | 159 | 20 |
| Example 19 | 68 | 150 | 20 |
| Comparative Example 4 | 65 | 142 | 20 |
| Comparative Example 5 | 58 | 132 | 40 |

[Table 6]

| | Film thickness (μm) | Turbidity (%) | Total light transmittance (%) |
|---|---|---|---|
| Example 18 | 50 | 0.4 | 91.2 |
| Example 19 | 56 | 0.2 | 91.4 |
| Comparative Example 4 | 58 | 0.6 | 90.8 |
| Comparative Example 5 | 58 | 0.8 | 91.0 |

[Table 7]

| | Orientation birefringence | |
|---|---|---|
| | 50% draw ratio | 100% draw ratio |
| Example 18 | $3.2\times10^{-6}$ | $1.5\times10^{-6}$ |
| Example 19 | $2.8\times10^{-6}$ | $6.0\times10^{-5}$ |
| Comparative Example 4 | $8.1\times10^{-4}$ | $1.8\times10^{-4}$ |
| Comparative Example 5 | $1.9\times10^{-3}$ | $3.4\times10^{-3}$ |

[Example: Retardation film]

In Examples 20 to 28 and Comparative Examples 7 and 8 below, the properties of each of the products ((i) resins and (ii) films respectively obtained from the resins) were measured in the following manner.

(1) Glass transition temperature
A sample having a weight of approximately 5 mg was taken from the product. The sample was measured with the use of a DSC measurement apparatus (manufactured by Shimazu Corporation) while the temperature was allowed to rise from 20˚C to 250˚C at a heating rate of 20˚C/min. In accordance with the measurement results, the glass transition temperature of the sample was calculated by using the midpoint method.
(2) Imidization ratio
A TravelIR measurement apparatus (manufactured by SensIR Technologies) was used. The imidization ratio was calculated in accordance with the ratio of (i) an absorbance at approximately 1720 $cm^{-1}$ to (ii) an absorbance at 1660 $cm^{-1}$. The absorbance at 1720 $cm^{-1}$ is derived from estercarbonyl groups, and the absorbance at 1660 $cm^{-1}$

is derived from imidecarbonyl groups. As the term is used herein, the "imidization ratio" refers to the proportion of the imidecarbonyl groups in the whole carbonyl groups.

(3) Styrene content

An NMR measurement apparatus (Gemini-300; manufactured by Varian Inc.) was used. The styrene content was determined in accordance with the ratio of (i) an integrated intensity assigned to aromatic protons to (ii) an integrated intensity assigned to aliphatic protons.

(4) Solvent resistance

A pellet having a weight of approximately 0.4 g was obtained from the imide resin. The pellet thus obtained was immersed in 2 mL of toluene. After 24 hours, a change in the shape of the pellet was checked with eyes.

(5) Film thickness

From the film, a test piece with the dimensions of 10 mm × 150 mm was cut out. Five thicknesses of the test pieces were measured with the use of a digimatic indicator (manufactured by Mitutoyo) at a temperature of 23±2°C and a humidity of 60±5%. The film thickness was obtained by averaging the five thicknesses.

(6) Turbidity

From the film, a test piece with the dimensions of 50 mm × 50 mm was cut out. The turbidity of the test piece was measured with the use of a turbidimeter (NDH-300A; manufactured by Nippon Denshoku Industry Co., Ltd.) at a temperature of 23±2°C and a humidity of 50±5%.

(7) Total light transmittance

The total light transmittance was measured with the use of a turbidimeter (NDH-300A; manufactured by Nippon Denshoku Industry Co., Ltd.). The measurement was carried out by a method described in 5.5 of JIS K7105-1981.

(8) Film strength

From the film, a test piece having a length of 150 mm and a width of 15 mm was cut out. The strength of the test piece was measured with the use of an MIT crease-flex fatigue tester (manufactured by Toyo Seiki Kogyo Co., Ltd.) The measurement was carried out under a 300 g load with a stress cycle of 175 times/min.

(9) Photoelastic coefficient

From the film, a test piece with the dimensions of 20 cm × 1 cm was cut out so as to have a rectangular shape. The photoelastic coefficient of the test piece was measured with the use of a polarization microspectrophotometer (TFM-120ATF-PC; manufactured by ORC Manufacturing Co., Ltd.) at a temperature of 23±2°C and a humidity of 50±5%. The polarization microspectrophotometer was set such that the wavelength was 515 nm. The double refractive index was measured under the following conditions (1) and (2): (1) one end of the film was fixed and the other end of the film was put under no load; and (2) one end of the film was fixed and the other end of the film was put under a 500 g load. In accordance with the results thus obtained, an amount of change in double refractive index due to unit stress was calculated.

(10) Phase difference

From a transversely central portion of the film, a test piece with the dimensions of 3.5 cm × 3.5 cm was cut out. The phase difference was measured with the use of KOBRA-21ADH (manufactured by Oji Scientific Instruments) at a temperature of 23±2°C and a humidity of 50±5% by using a light ray having a wavelength of 590 nm and an incidence angle of 0°.

(11) Orientation birefringence

The thickness of the test piece was measured with the use of a digimatic indicator (manufacture by Mitutoyo Corporation) at a temperature of 23±2°C and a humidity of 60±5%. The orientation birefringence was obtained by dividing the phase difference of Section (10) by the thickness.

(Example 20)

An imide resin was produced by imidizing (i) a commercially available methyl methacrylate-styrene copolymer (Estyrene MS-600; manufactured by Nippon Steel Chemical Co., Ltd.) with the use of (ii) monomethylamine serving as an imidization agent. The extruder used herein is an intermeshing co-rotating type twin-screw extruder having a bore diameter of 15 mm. The temperature of temperature control zones of the extruder was set at 230°C. The screw rotation speed was set at 300 rpm. The MS resin was fed to the extruder at a feed rate of 1 kg/hr, and methylamine was fed in 30 parts by weight of the MS resin. The MS resin was fed through a hopper of the extruder, and was melted in a kneading block of the extruder such that the kneading block was fully charged with the resin thus melted. Thereafter, methylamine was injected through a nozzle of the extruder. A seal ring was placed in an end of the reaction zone such that the reaction zone was fully charged with the resin. After the reaction, a by-product and an excess of methylamine were volatilized while reducing the pressure exerted on a vent of the extruder to -0.02 MPa. The imide resin was extruded through a die provided at an exit of the extruder, so as to be shaped into a strand. The imide resin thus extruded was cooled down in a water tank, and then was pelletized by a pelletizer. Table 8 shows the imidization ratio, glass transition temperature, styrene content of the imide resin thus obtained.

The imide resin thus obtained was dissolved in methylene chloride. As a result, a resin solution having a resin concentration of approximately 25% was prepared. The solution thus obtained was applied onto a PET film, and then was dried. As a result, a cast film was obtained. Table 9 shows the thickness, turbidity, total light transmittance, and a phase difference value of the film thus obtained.
These results show that the film thus obtained has good heat-resistance and transparency, that it has a phase difference smaller than that of a polycarbonate film in Comparative Example 7 described later, and that it is therefore useful as a retardation film.
From the film thus obtained, a sample having a width of 50 mm and a length of 150 mm was cut out. The sample was stretched at a draw ratio of 100% at a temperature 5˚C higher than the glass transition temperature. As a result, a drawn film was produced. Table 10 shows the thickness and phase difference of the film thus obtained.
These results show that the film thus obtained expresses a phase difference which a retardation film is required to have.

(Example 21)

In Example 21, the same operations were carried out as in Example 20, except that a commercially available methyl methacrylate-styrene copolymer (Estyrene MS-800; manufactured by Nippon Steel Chemical Co., Ltd.) was used as the methyl methacrylate-styrene copolymer and methylamine was fed in 40 parts by weight of the MS resin. Table 8 shows the imidization ratio, glass transition temperature, and styrene content of the imide resin thus obtained.
The imide resin thus obtained was processed in the same manner as in Example 20. As a result, a cast film was produced. Table 9 shows the thickness, turbidity, total light transmittance, and a phase difference value of the film thus obtained.
These results show that the film thus obtained has good heat-resistance and transparency, that it has a phase difference smaller than that of a polycarbonate film in Comparative Example 7 described later, and that it is therefore useful as a retardation film.
A drawn film was produced in the same manner as in Example 20. Table 10 shows the thickness and phase difference of the film thus obtained.
These results show that the film thus obtained expresses a phase difference which a retardation film is required to have.

(Example 22)

In Example 22, the same operations carried out as in Example 21, except that a methyl methacrylate-styrene copolymer obtained by polymerizing methyl methacrylate (90 wt%) and styrene (10 wt%) by way of mass polymerization was used as the methyl methacrylate-styrene copolymer. Table 8 shows the imidization ratio, glass transition temperature, and styrene content of the imide resin thus obtained.
The imide resin thus obtained was processed in the same manner as in Example 20. As a result, a cast film was produced. Table 9 shows the thickness, turbidity, total light transmittance, and a phase difference value of the film thus obtained.
These results show that the film thus obtained has good heat-resistance and transparency, that it has a phase difference smaller than that of a polycarbonate film in Comparative Example 7 described later, and that it is therefore useful as a retardation film.
A drawn film was produced in the same manner as in Example 20. Table 10 shows the thickness and phase difference of the film thus obtained.
These results show that the film thus obtained expresses a phase difference required in a retardation film.

(Comparative Example 7)

A resin solution having a resin concentration of approximately 15% was prepared by dissolving polycarbonate (C-1400; manufactured by Teijin Co., Ltd.; glass transition temperature 149˚C) in methylene chloride. The solution thus obtained was applied onto a PET film, and then was dried. As a result, a cast film was obtained. Table 9 shows the thickness, turbidity, total light transmittance, and a phase difference value of the film thus obtained.

(Example 23)

The photoelastic coefficient of the imide resin film obtained in Example 20 was measured. As a result, the imide resin film obtained in Example 20 was found to have a photoelastic coefficient of $2\times10^{-12}$ $m^2/N$. On the other hand, the polycarbonate film obtained in Comparative Example 7 was found to have a photoelastic coefficient of $70\times10^{-12}$ $m^2/N$.

These results show that the imide resin film has a small photoelastic coefficient and therefore is useful as a retardation film.

[Table 8]

| | Imidization ratio (%) | Glass transition temperature (˚C) | Styrene content (%) |
|---|---|---|---|
| Example 20 | 58 | 132 | 40 |
| Example 21 | 68 | 140 | 20 |
| Example 22 | 70 | 160 | 10 |

[Table 9]

| | Film thicknes s (μm) | Turbidity (%) | Total light transmittance (%) | Phase difference (nm) |
|---|---|---|---|---|
| Example 20 | 58 | 0.6 | 91.0 | 0.4 |
| Example 21 | 58 | 0.4 | 91.3 | 0.6 |
| Example 22 | 56 | 0.9 | 90.9 | 0.4 |
| Comparative Example 7 | 80 | 0.3 | 90.0 | 21 |

[Table 10]

| | Film thickness (μm) | Phase difference (nm) |
|---|---|---|
| Example 20 | 37 | 80 |
| Example 21 | 33 | 126 |
| Comparative Example 22 | 35 | 90 |

(Example 24)

An imide resin was produced by imidizing (i) a commercially available methyl methacrylate-styrene copolymer (Estyrene MS-600; manufactured by Nippon Steel Chemical Co., Ltd.) with the use of (ii) methylamine serving as an imidization agent. The extruder used herein is an intermeshing co-rotating type twin-screw extruder having a bore diameter of 15 mm. The temperature of temperature control zones of the extruder was set at 230˚C. The screw rotation speed was set at 300 rpm. The MS resin was fed to the extruder at a feed rate of 1 kg/hr, and methylamine was fed in 30 parts by weight of the MS resin. The MS resin was fed through a hopper of the extruder, and was melted in a kneading block of the extruder such that the kneading block was fully charged with the resin thus melted. Thereafter, methylamine was injected through a nozzle of the extruder. A seal ring was placed in an end of the reaction zone such that the reaction zone was fully charged with the resin. After the reaction, a by-product and an excess of methylamine were volatilized while reducing the pressure exerted on a vent of the extruder to -0.02 MPa. The imide resin was extruded through a die provided at an exit of the extruder, so as to be shaped into a strand. The imide resin thus extruded was cooled down in a water tank, and then was pelletized by a pelletizer. Table 11 shows the imidization ratio, glass transition temperature, styrene content of the imide resin thus obtained.

The imide resin thus obtained was dissolved in methylene chloride. As a result, a resin solution having a resin concentration of approximately 25% was prepared. The solution thus obtained was applied onto a PET film, and then was dried. As a result, a cast film was obtained. Table 12 shows the thickness, turbidity, and total light transmittance of the film thus obtained.

These results show that the film thus obtained has good heat-resistance and transparency and therefore is useful as a retardation film.

From the film thus obtained, samples each having a width of 50 mm and a length of 150 mm were cut out. A drawn film was produced by stretching one of the samples at a draw ratio of 50% at a temperature 5˚C higher than the glass transition temperature. Another drawn film was produced by stretching another one of the samples at a draw ratio of 100% at the same temperature. Table 13 shows the orientation birefringence of each of the drawn films thus obtained.

These results show that the film obtained in Example exhibits sufficiently negative intrinsic double refraction.

(Example 25)

In Example 25, the same operations were carried out as in Example 24, except that methylamine was fed in 20 parts by weight of the MS resin. Table 11 shows the imidization ratio, glass transition temperature, and styrene content of the resin thus obtained.

From the imide resin thus obtained, a cast film was produced in the same manner as in Example 24. Table 12 shows the thickness, turbidity, and total light transmittance of the film thus obtained.

These results show that the film thus obtained has good heat-resistance and transparency and therefore is useful as a retardation film.

Drawn films were produced in the same manner as in Example 24. Table 13 shows the orientation birefringence of each of the drawn films thus obtained.

These results show that the film obtained in Example exhibits sufficiently negative intrinsic double refraction.

(Example 26)

In Example 26, the same operations were carried out as in Example 24, except that (i) Atrate® MS Resin MM-70 (manufactured by Nippon A&L Inc.) was used as the methyl methacrylate-styrene copolymer, that (ii) the MS resin was fed at a feed rate of 0.5 kg/hr, and that (iii) methylamine was fed in 40 parts by weight of the MS resin. Table 11 shows the imidization ratio, glass transition temperature, and styrene content of the imide resin thus obtained.

From the imide resin thus obtained, a cast film was produced in the same manner as in Example 24. Table 12 shows the thickness, turbidity, and total light transmittance of the film thus obtained.

These results show that the film thus obtained has good heat-resistance and transparency and therefore is useful as a retardation film.

Drawn films were produced in the same manner as in Example 24. Table 13 shows the orientation birefringence of each of the drawn films thus obtained.

These results show that the film obtained in Example exhibits sufficiently negative intrinsic double refraction.

(Comparative Example 8)

In Comparative Example 8, the same operations were carried out as in Example 26, except that Estyrene MS-800 manufactured by Nippon Steel Chemical Co., Ltd. was used as the methyl methacrylate-styrene copolymer. Table 11 shows the imidization ratio, glass transition temperature, and styrene content of the imide resin thus obtained.

From the imide resin thus obtained, a cast film was produced in the same manner as in Example 24. Table 12 shows the thickness, turbidity, and total light transmittance of the film thus obtained.

Drawn films were produced in the same manner as in Example 24. Table 13 shows the orientation birefringence of each of the drawn films thus obtained.

(Example 27)

The photoelastic coefficient of the film obtained in Example 24 was measured. As a result, the film was found to have a photoelastic coefficient of $2\times10^{-12}$ $m^2/N$. This shows that the film thus obtained has a small photoelastic coefficient and therefore is useful as a retardation film.

(Example 28)

From the film obtained in Example 24, a biaxial stretched film was produced with the use of a laboratory biaxially stretching apparatus (manufactured by Shibayama Scientific Co., Ltd.) at a draw ratio of 50% at a temperature 20˚C higher than the glass transition temperature. The biaxially stretched film thus obtained has a phase difference (Rth) of -41.2 nm in a thickness direction.

This shows that the film thus obtained expresses a phase difference in a thickness direction.

[Table 11]

| | Imidization ratio (%) | Glass transition temperature (˚C) | Styrene content (%) |
|---|---|---|---|
| Example 24 | 58 | 132 | 40 |
| Example 25 | 52 | 129 | 40 |
| Comparative Example 26 | 59 | 133 | 30 |
| Comparative Example 8 | 72 | 166 | 20 |

[Table 12]

| | Film thickness (μm) | Turbidity (%) | Total light transmittance (%) |
|---|---|---|---|
| Example 24 | 58 | 0.6 | 91.0 |
| Example 25 | 53 | 0.4 | 91.3 |
| Comparative Example 26 | 48 | 0.5 | 91.1 |
| Comparative Example 8 | 49 | 0.9 | 90.8 |

[Table 13]

| | Orientation birefringence | |
|---|---|---|
| | 50% drawing | 100% drawing |
| Example 24 | $-1.9\times10^{-3}$ | $-3.4\times10^{-3}$ |
| Example 25 | $-1.5\times10^{-3}$ | $-2.3\times10^{-3}$ |
| Comparative Example 26 | $-9.3\times10^{-4}$ | $-1.7\times10^{-3}$ |
| Comparative Example 8 | $-1.9\times10^{-5}$ | $2.0\times10^{-5}$ |

[Example: Imidized methacrylic resin composition]

In Production Examples and Comparative Example below, the "parts" represents "parts by weight" and the "%" represents "wt%". The abbreviations represent the following substances, respectively.
BA: Butyl acrylate
MMA: Methyl methacrylate
AlMA: Allyl methacrylate
CHP: Cumene hydroperoxide
tDM: Tertiary dodecyl mercaptane
In Examples and Comparative Examples below, the properties of each of the products were measured in the following manners.

(1) Measurement of an imidization ratio
An IR spectrum of the pellet of the product thus obtained was measured at room temperature with the use of a TravelIR (manufactured by SensIR Technologies). In the IR spectrum thus obtained, an absorbance at 1720 $cm^{-1}$ and an absorbance at 1660 $cm^{-1}$ were observed. The absorbance at 1720 $cm^{-1}$ is assigned to estercarbonyl groups, and the absorbance at 1660 $cm^{-1}$ is assigned to imidecarbonyl groups. The imidization ratio was calculated in accordance with the ratio of (i) the absorbance at 1720 $cm^{-1}$ to (ii) the absorbance at 1660 $cm^{-1}$. As the term is used herein, the "imidization ratio" refers to the proportion of the imidecarbonyl groups in the whole carbonyl groups.
(2) Glass transition temperature
A 10 mg sample was taken from the product thus obtained. The sample was measured with the use of a differential scanning calorimeter (DSC-50; manufactured by Shimazu Corporation) at a heating rate of 20˚C/min in an atmosphere of nitrogen. In accordance with the measurement results, the glass transition temperature of the sample was determined by using the midpoint method.
(3) Orientation birefringence
The imidized methacrylic resin composition thus obtained was dissolved in methylene chloride. As a result, a solution (having a resin concentration of 25 wt%) was prepared. The solution was applied onto a PET film. The temperature was allowed to rise from 70˚C to the glass transition temperature of the imidized methacrylic resin at a heating rate of 5˚C/5min. The solution thus applied onto the PET film was left unattended at the glass transition temperature so as to be dried. As a result, a film (having a thickness of approximately 50 mm) was produced. From the film thus obtained, a sample having a width of 50 mm and a length of 150 mm was cut out. The sample was uniaxially stretched at a draw ratio of 100% in a longitudinal direction while the temperature was allowed to be 5˚C higher than the glass transition temperature. As a result, a drawn film was produced. From a longitudinally central portion of the uniaxially drawn film thus obtained, a test piece with the dimensions of 35 mm × 35 mm was cut out. The phase difference of the test piece was measured with the use of a phase difference measurement apparatus

(KOBRA-21ADH; manufactured by Oji Scientific Instruments) at a temperature of 23±2°C and a humidity of 50±5% by using a light ray having a wavelength of 590 nm and an incidence angle of 0°. Then, the thickness of the test piece was measured with the use of a digimatic indicator (manufacture by Mitutoyo Corporation) at a temperature of 23±2°C and a humidity of 60±5%. The orientation birefringence was obtained by dividing the phase difference by the thickness.
(4) Transparency
The imidized methacrylic resin composition thus obtained was molded into a film having a thickness of 100 μm. The molding was carried out with the use of a T-die extruder (having a bore diameter of 40 mm) whose die was set at a temperature of 260°C. The haze value of the film thus obtained was measured at a temperature of 23±2°C and a humidity of 50±5%. The measurement was carried out in conformity to JIS K6714.
(5) Secondary workability (bending resistance)
A film obtained in the same manner as in Section (4) was bent 180°. A change in the bent portion was checked with eyes.
o: No cracks found
×: Cracks found
(Production Example 1) Production of a methacrylic resin composition

The following substances (i) through (v) were fed to an 8 L polymerization apparatus equipped with a stirring machine.

(i) Deionized water (200 parts)
(ii) Sodium dioctylsulfosuccinate (0.25 parts)
(iii) Sodium formaldehyde sulfoxylate (0.15 parts)
(iv) Ethylene diamine tetra-acetic acid-2-sodium (0.005 parts)
(v) Ferrous sulfide (0.0015 parts)
Air contained in the polymerization machine was sufficiently substituted by nitrogen gas such that virtually no oxygen was present in the polymerization machine. Thereafter, the internal temperature was set at 60°C, and 30 parts by weight of a monomer mixture serving as a material for an ester acrylate cross-linked elastic body particle (B) shown in Column (1) of Table 14 was continuously added at a rate of 10 parts by weight per hour. Specifically, the monomer mixture is made up of 3 parts by weight of AIMA and 0.2 parts by weight of CHP with respect to 100 parts by weight of a monomer mixture made up of 70 wt% BA and 30 wt% MMA. After the addition, the polymerization was allowed to further continue for 0.5 hours. As a result, the ester acrylate cross-linked elastic body particle (B) was obtained. The ester acrylate cross-linked elastic body particle (B) thus obtained has a polymerization inversion rate of 99.5 % and an average particle diameter of 800 Å. Thereafter, 0.3 parts by weight of sodium dioctylsulfosuccinate was fed to the polymerization apparatus. Then, the internal temperature was set at 60°C, and 70 parts by weight of a monomer mixture serving as a material for an ester acrylate polymer (A) shown in Column (1) of Table 14 was continuously added at a rate of 10 parts by weight per hour. Specifically, the monomer mixture is made up of 0.3 parts by weight of tDM and 0.4 parts by weight of CHP with respect to a monomer mixture made up of 27 w% BA, 70 wt% MMA, and 3 wt% styrene. Then, the polymerization was allowed to further continue for 1 hour. As a result, a methacrylic resin composition (C) was obtained. The methacrylic resin composition (C) thus obtained has a polymerization inversion rate of 99.0%. The latex thus obtained was salted out with the use of calcium chloride so as to be coagulated, and was rinsed with water, and then was dried. As a result, a resin powder (1) of the methacrylic resin composition (C) was obtained. Further, the resin powder (1) thus obtained was melted and kneaded with the use of a single-screw extruder with a vent (having a bore diameter of 40 mm) whose cylinder was set at a temperature of 230°C, so as to be pelletized.

(Production Examples 2 to 7)

Polymerization was carried out in the same manner as in Production Example 1. As a result, the methacrylic resin composition (C) was obtained. The latex thus obtained was coagulated, was rinsed with water, and then was dried. As a result, resin powders (2) to (7) of the methacrylic resin composition (C) were obtained. Each of the resin powders (2) to (7) was pelletized with the use of a single-screw extruder, having a vent, whose bore diameter was 40 mm.

(Example 29)

An imidized methacrylic resin composition was produced as follows. The methacrylic resin composition (C) used herein was the resin powder (1) produced in Production Example 1, and the imidization agent used herein was methylamine. The extruder used herein was an intermeshing co-rotating type twin-screw extruder having a bore diameter

of 15 mm. A kneading zone of the extruder was set at 230˚C. The methacrylic resin composition (C) was fed through a hopper of the extruder at a feed rate of 1.5 kg/hr so that the kneading zone was fully charged with the methacrylic resin composition (C). Thereafter, the imidization agent was injected through a liquid-adding pump in 10 parts by weight of the methacrylic resin composition (C). After the reaction, a by-product and an excess of methylamine were volatilized while reducing the pressure exerted on a vent of the extruder to -0.02 MPa. The imidized methacrylic resin composition extruded through a die provided at an exit of the extruder was cooled down in a water tank, and then was pelletized by a pelletizer.

The various properties of the imidized methacrylic composition thus obtained were measured. Table 15 shows the measurement results and the imidization ratio of the composition.

(Examples 30 to 33 and Comparative Examples 9 to 11)

In Examples 30 to 33 and Comparative Examples 9 to 11, the same operations as in Example 29 were carried out except that (i) the type of methacrylic resin composition, (ii) the type of imidization agent, and (iii) the amount of imidization agent fed were changed as shown in Table 15. That is, an imidized methacrylic resin composition was produced in the same manner as in Example 29. The methacrylic resin composition (C) used herein is each of the resin powders (2) to (7) respectively produced in Production Examples (2) to (7), and the imidization agent used herein is methylamine or cyclohexylamine. Table 15 shows the resin powders and imidization agents respectively used in

Examples.

The various properties of each of the imidized methacrylic compositions thus obtained were measured. Table 15 shows the measurement results and the imidization ratio of the composition. (In Table 15, MA is an abbreviation for methylamine, and CHA is an abbreviation for cyclohexylamine.)

[Table 14]

| Production Examples | | 1 | 2 | 3 | 4 | 5 | 6 | 7 |
|---|---|---|---|---|---|---|---|---|
| Methacrylic resin compositions (C) | | (1) | (2) | (3) | (4) | (5) | (6) | (7) |
| Methacrylic acid ester resin (A) | Parts by weight | 70 | 80 | 90 | 80 | 80 | 70 | 80 |
| | BA (%) | 27 | 5 | 5 | 0 | 0 | 0 | 10 |
| | MMA (%) | 70 | 90 | 90 | 90 | 80 | 40 | 90 |
| | St (%) | 3 | 5 | 5 | 10 | 20 | 60 | 0 |
| | tDM (parts) | 0.30 | 0.30 | 0.30 | 0.30 | 0.30 | 0.30 | 0.30 |
| | CHP (parts) | 0.40 | 0.40 | 0.40 | 0.40 | 0.40 | 0.40 | 0.40 |
| Acrylic acid ester cross-linked elastic body particle (B) | Parts by weight | 30 | 20 | 10 | 20 | 20 | 30 | 20 |
| | BA (%) | 70 | 90 | 90 | 90 | 90 | 90 | 90 |
| | MMA (%) | 30 | 10 | 10 | 10 | 10 | 10 | 10 |
| | AIMA (parts) | 3.0 | 3.0 | 2.0 | 1.0 | 1.0 | 3.0 | 3.0 |
| | CHP (parts) | 0.20 | 0.20 | 0.20 | 0.20 | 0.20 | 0.20 | 0.20 |

[Table 15]

| | Examples | | | | | Comparative Examples | | |
|---|---|---|---|---|---|---|---|---|
| | 29 | 30 | 31 | 32 | 33 | 9 | 10 | 11 |
| Methacrylic resin compositions (C) | (1) | (2) | (3) | (4) | (5) | (6) | (7) | (5) |

(continued)

| | | Examples | | | | | Comparative Examples | | |
|---|---|---|---|---|---|---|---|---|---|
| | | 29 | 30 | 31 | 32 | 33 | 9 | 10 | 11 |
| St(%) | | 3 | 5 | 5 | 10 | 20 | 60 | 0 | 20 |
| Imidization agent | Type | MA | MA | CHA | CHA | CHA | MA | MA | CHA |
| | Parts by weight | 7 | 10 | 10 | 15 | 40 | 60 | 3 | 70 |
| Imidization ratio (%) | | 20 | 30 | 30 | 45 | 65 | 90 | 10 | 95 |
| Glass transition temperature (˚C) | | 125 | 135 | 135 | 150 | 170 | 185 | 110 | 180 |
| Orientation birefringence ($\times 10^{-3}$) | | -0.02 | -0.04 | 0.05 | 0.03 | 0.03 | 0.08 | 0.05 | 2.53 |
| Transparency: haze (%) | | 0.4 | 0.5 | 0.5 | 0.5 | 0.6 | 12.5 | 0.6 | 4.04 |
| Secondary workability (bending resistance) | | ○ | ○ | ○ | ○ | ○ | × | ○ | × |

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

INDUSTRIAL APPLICABILITY

(Functions/Effects)

It is possible to provide an imide resin (i) which is easily produced, (ii) which is inexpensive, (iii) which has excellent transparency and heat resistance, and (iv) which has controllable orientation birefringence. Further, the imide resin of the present invention can be applied to a molded product required to have transparency and heat resistance, and can be substituted for glass.

Further, an imidized methacrylic resin composition of the present invention is a thermoplastic resin which has small orientation birefringence and which has excellent secondary workability (bending resistance), transparency, and heat resistance. Therefore, the imidized methacrylic resin composition can be applied to various molded products such as an optical part and a vehicle optical part. Examples of the optical part include a lens, a liquid crystal display member, and the like. Examples of the vehicle optical part include an automobile headlight cover, an instrument cover, a sunroof, and the like.

Further, it is possible to provide: a polarizer-protective film (a) which is easily produced, (b) which has excellent heat resistance, strength, and moisture permeability, and (c) which has a sufficiently small photoelastic coefficient; and a method for producing the polarizer-protective film.

Further, it is possible to provide: a retardation film (I) which is easily produced, (II) which has excellent transparency, heat resistance, and mechanical characteristic, and (III) which has a uniform phase difference; and a method for producing the retardation film.

## Claims

1. An imide resin, comprising: a repeating unit represented by General Formula (1); a repeating unit represented by General Formula (2); and a repeating unit represented by General Formula (3), wherein an orientation birefringence of the imide resin ranges from $-0.1\times 10^{-3}$ to $0.1\times 10^{-3}$,

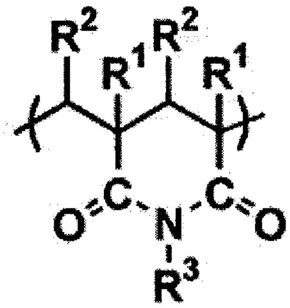

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

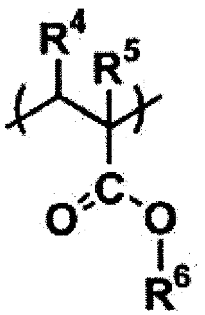

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

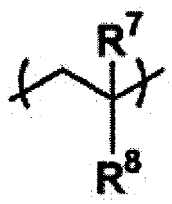

· · · (3)

where $R^7$ represents a hydrogen atom or an alkyl group having 1 to 8 carbon atoms, and $R^8$ represents an aryl group having 6 to 10 carbon atoms.

**2.** The imide resin as set forth in claim 1, wherein the orientation birefringence ranges from $-0.01\times10^{-3}$ to $0.01\times10^{-3}$.

**3.** A polarizer-protective film as set forth in claim 1, wherein a molar ratio of the repeating unit represented by General Formula (1) and the repeating unit represented by General Formula (3) ranges from 1.0 : 1.0 to 4.0 : 1.0.

**4.** The imide resin as set forth in claim 1, wherein a photoelastic coefficient is not more than $10\times10^{-12}m^2/N$.

**5.** The imide resin as set forth in claim 1, wherein a glass transition temperature is not less than 120°C.

**6.** The imide resin as set forth in claim 1, being produced on the basis of a method in which a methyl methacrylate-styrene copolymer is treated with an imidization agent in the absence of a solvent.

**7.** The imide resin as set forth in claim 1, being produced on the basis of a method in which a methyl methacrylate-styrene copolymer is treated with an imidization agent in the presence of a solvent.

**8.** An optical resin composition, comprising as a main component the imide resin as set forth in any one of claims 1 to 7.

**9.** A molded product, comprising the optical resin composition as set forth in claim 8.

**10.** An imide resin, comprising: a repeating unit represented by General Formula (1); a repeating unit represented by General Formula (2); and a repeating unit represented by General Formula (3), wherein the imide resin has a negative orientation birefringence,

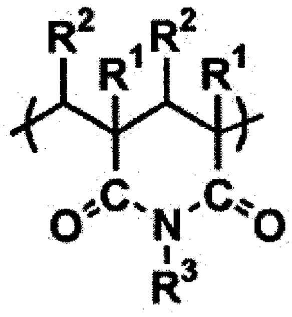

・・・(1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

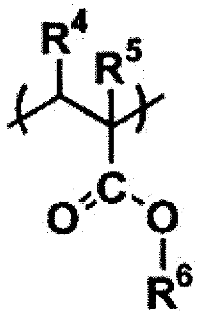

・・・(2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

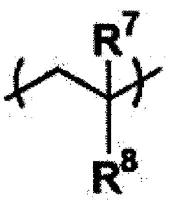

・・・(3)

where $R^7$ represents a hydrogen atom or an alkyl group having 1 to 8 carbon atoms, and $R^8$ represents an aryl group having 6 to 10 carbon atoms.

**11.** The imide resin as set forth in claim 10, wherein the orientation birefringence is not more than $-0.15\times10^{-3}$.

**12.** The imide resin as set forth in claim 10, wherein a photoelastic coefficient is not more than $10\times10^{-12}m^2/N$.

**13.** The imide resin as set forth in claim 10, wherein a glass transition temperature is not less than 120°C.

**14.** The imide resin as set forth in claim 10, being produced on the basis of a method in which a methyl methacrylate-styrene copolymer is treated with an imidization agent in the absence of a solvent.

**15.** The imide resin as set forth in claim 10, being produced on the basis of a method in which a methyl methacrylate-styrene copolymer is treated with an imidization agent in the presence of a solvent.

**16.** An optical resin composition, comprising as a main component the imide resin as set forth in any one of claims 10 to 15.

**17.** A molded product, comprising the optical resin composition as set forth in claim 16.

**18.** An imide resin, comprising: a repeating unit represented by General Formula (1); a repeating unit represented by General Formula (2); and a repeating unit represented by General Formula (3), wherein a melt viscosity of the imide resin ranges from 1000 to 50000 poise,

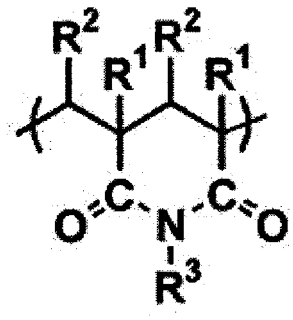

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

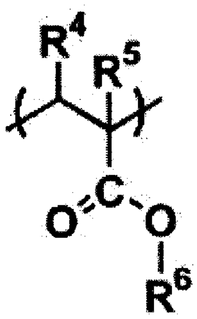

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

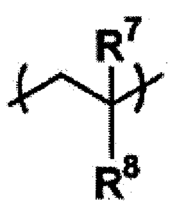

· · · (3)

where $R^7$ represents a hydrogen atom or an alkyl group having 1 to 8 carbon atoms, and $R^8$ represents an aryl group having 6 to 10 carbon atoms.

**19.** The imide resin as set forth in claim 18, having positive orientation birefringence.

**20.** The imide resin as set forth in claim 18, wherein the orientation birefringence is not less than $0.15\times10^{-3}$.

**21.** The imide resin as set forth in claim 18, wherein a photoelastic coefficient is not more than $10\times10^{-12}m^2/N$.

**22.** The imide resin as set forth in claim 18, wherein a glass transition temperature is not less than 120˚C.

**23.** The imide resin as set forth in claim 18, being produced on the basis of a method in which a methyl methacrylate-styrene copolymer is treated with an imidization agent in the absence of a solvent.

**24.** The imide resin as set forth in claim 18, being produced on the basis of a method in which a methyl methacrylate-styrene copolymer is treated with an imidization agent in the presence of a solvent.

**25.** An optical resin composition, comprising as a main component the imide resin as set forth in any one of claims 18 to 24.

**26.** A molded product, comprising the optical resin composition as set forth in claim 25.

**27.** A polarizer-protective film, comprising an imide resin which includes: a repeating unit represented by General Formula (1); a repeating unit represented by General Formula (2); and a repeating unit represented by General Formula (3),

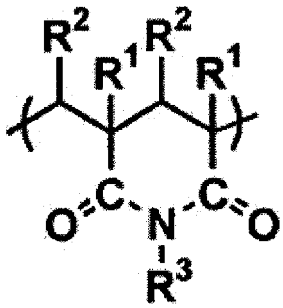

・・・(1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

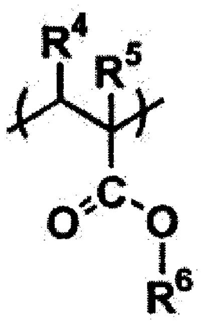

・・・(2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

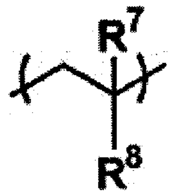

・・・(3)

where $R^7$ represents a hydrogen atom or an alkyl group having 1 to 8 carbon atoms, and $R^8$ represents an aryl group having 6 to 10 carbon atoms.

**28.** The polarizer-protective film as set forth in claim 27, wherein an orientation birefringence of the imide resin ranges from $-0.1\times10^{-3}$ to $0.1\times10^{-3}$.

**29.** The polarizer-protective film as set forth in claim 27, wherein an orientation birefringence of the imide resin ranges from $-0.1\times10^{-4}$ to $0.1\times10^{-4}$.

**30.** The polarizer-protective film as set forth in claim 27, wherein: in the imide resin, a molar ratio of the repeating unit represented by General Formula (1) and the repeating unit represented by General Formula (3) ranges from 1.0 : 1.0 to 4.0 : 1.0.

**31.** The polarizer-protective film as set forth in claim 27, wherein a photoelastic coefficient of the imide resin is not more than $10\times10^{-12}m^2/N$.

**32.** The polarizer-protective film as set forth in claim 27, wherein a glass transition temperature of the imide resin is not less than 120°C.

**33.** A polarization plate, comprising the polarizer-protective film as set forth in any one of claims 27 to 32.

**34.** A production method of a polarizer-protective film, comprising the steps of:

(i) making, into a film, an imide resin including a repeating unit represented by General Formula (1), a repeating unit represented by General Formula (2), and a repeating unit represented by General Formula (3); and
(ii) drawing the imide resin having been made into the film,

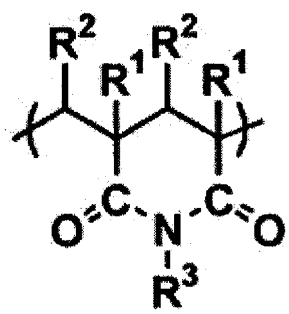

・・・(1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

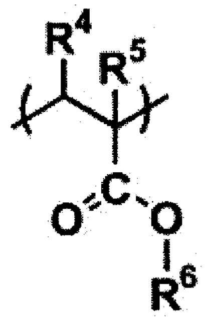

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

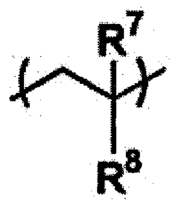

· · · (3)

where $R^7$ represents a hydrogen atom or an alkyl group having 1 to 8 carbon atoms, and $R^8$ represents an aryl group having 6 to 10 carbon atoms.

**35.** The polarizer-protective film as set forth in claim 34, wherein: in the imide resin, a molar ratio of the repeating unit represented by General Formula (1) and the repeating unit represented by General Formula (3) ranges from 1.0 : 1.0 to 4.0 : 1.0.

**36.** The production method as set forth in claim 34, wherein: in the step (i), the imide resin is made into the film on the basis of a melt extrusion method.

**37.** The production method as set forth in claim 34, wherein: in the step (i), the imide resin is made into the film on the basis of a solvent casting method.

**38.** The production method as set forth in claim 34, wherein: in the step (ii), biaxially stretching is carried out.

**39.** A retardation film, comprising an imide resin which includes: a repeating unit represented by General Formula (1); a repeating unit represented by General Formula (2); and a repeating unit represented by General Formula (3),

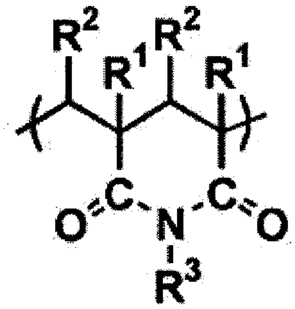

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

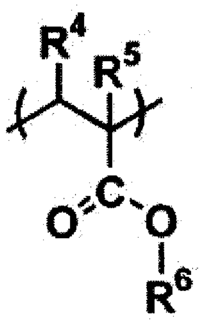

$\cdots$ (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

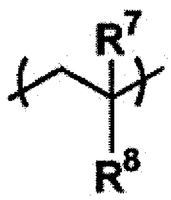

$\cdots$ (3)

where $R^7$ represents a hydrogen atom or an alkyl group having 1 to 8 carbon atoms, and $R^8$ represents an aryl group having 6 to 10 carbon atoms.

**40.** The retardation film as set forth in claim 39, wherein the imide resin has negative orientation birefringence.

**41.** The retardation film as set forth in claim 39, wherein an orientation birefringence of the imide resin is not more than $-2 \times 10^{-3}$.

**42.** The retardation film as set forth in claim 39, wherein the imide resin includes 20 wt% to 50 wt% of the repeating unit represented by General Formula (3).

**43.** The retardation film as set forth in claim 39, wherein a photoelastic coefficient of the imide resin is not more than $10 \times 10^{-12} m^2/N$.

**44.** The retardation film as set forth in claim 39, wherein a glass transition temperature of the imide resin is not less than 120˚C.

**45.** A production method of a retardation film, comprising the steps of:

(i) making, into a film, an imide resin including a repeating unit represented by General Formula (1), a repeating unit represented by General Formula (2), and a repeating unit represented by General Formula (3); and
(ii) drawing the imide resin having been made into the film,

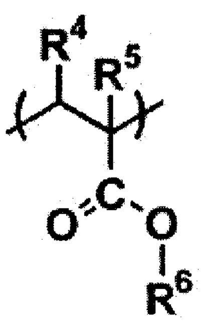

$\cdots$ (2)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

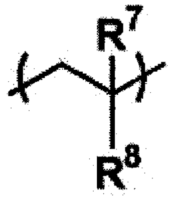

· · · (3)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

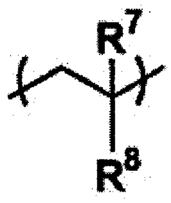

· · · (3)

where $R^7$ represents a hydrogen atom or an alkyl group having 1 to 8 carbon atoms, and $R^8$ represents an aryl group having 6 to 10 carbon atoms.

**46.** The production method as set forth in claim 45, wherein: in the step (i), the imide resin is made into the film on the basis of a melt extrusion method.

**47.** The production method as set forth in claim 45, wherein: in the step (i), the imide resin is made into the film on the basis of a melt drawing method.

**48.** A method for producing an imide resin which includes a repeating unit represented by General Formula

(1) and has substantially no orientation birefringence, said method comprising the step of:

(a) treating, with an imidization agent, a resin including a repeating unit represented by General Formula (2) and a repeating unit represented by General Formula (3) so that a quantity of the repeating unit represented by General Formula (3) is 15 wt% or more and 40 wt% or less,

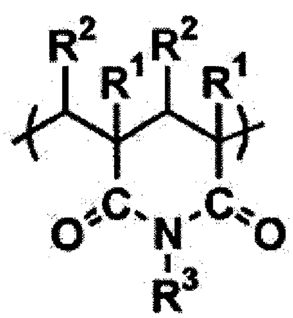

· · · (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

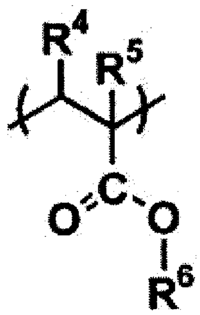

... (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

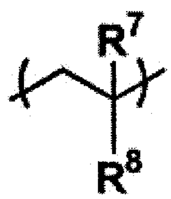

... (3)

where $R^7$ represents a hydrogen atom or an alkyl group having 1 to 8 carbon atoms, and $R^8$ represents an aryl group having 6 to 10 carbon atoms.

**49.** The method as set forth in claim 48, wherein: in the step (a), the resin is treated with the imidization agent so that a molar ratio of the repeating unit represented by General Formula (1) and the repeating unit represented by General Formula (3) ranges from 1.0 : 1.0 to 4.0 : 1.0.

**50.** A method for producing an imide resin, which includes a repeating unit represented by General Formula (1) and has a negative orientation birefringence, said method comprising the step of: (I) treating, with an imidization agent, a resin including a repeating unit represented by General Formula (2) and a repeating unit represented by General Formula (3) so that a quantity of the repeating unit represented by General Formula (3) is 20 wt% or more and 50 wt% or less,

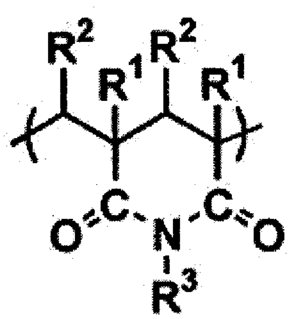

... (1)

where each of $R^1$ and $R^2$ independently represents a hydrogen atom or an alkyl group having 1 to 8 carbon atoms, and $R^3$ represents a hydrogen atom, an alkyl group having 1 to 18 carbon atoms, a cycloalkyl group having 3 to 12 carbon atoms, or an aryl group having 6 to 10 carbon atoms,

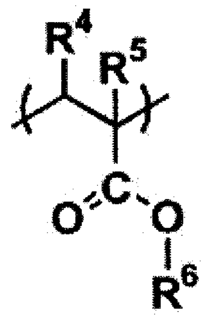

· · · (2)

where each of $R^4$ and $R^5$ independently represents a hydrogen atom or an alkyl group having 1 to 8 carbon atoms, and $R^6$ represents an alkyl group having 1 to 18 carbon atoms, a cycloalkyl group having 3 to 12 carbon atoms, or an aryl group having 6 to 10 carbon atoms,

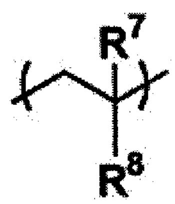

· · · (3)

where $R^7$ represents a hydrogen atom or an alkyl group having 1 to 8 carbon atoms, and $R^8$ represents an aryl group having 6 to 10 carbon atoms.

**51.** An imidized methacrylic resin composition, being transformed by treating, with an imidization agent, a methacrylic resin composition (C) obtained by copolymerizing a methacrylic ester polymer (A) in the presence of acrylic ester cross-linking elastic particles (B), wherein:

the methacrylic ester polymer (A) is a polymer obtained by polymerizing a monomer mixture including 50 to 99 wt% of methacrylic alkyl ester, 0 to 49 wt% of acrylic alkyl ester, and 1 to 50 wt% of an aromatic vinyl monomer, and the acrylic ester cross-linking elastic particles (B) are a copolymer obtained by polymerizing a monomer mixture (b) including 50 to 100 wt% of acrylic alkyl ester and 50 to 0 wt% of methacrylic alkyl ester with a multifunctional monomer having two or more unconjugated double bonds.

**52.** The imidized methacrylic resin composition as set forth in claim 51, wherein an orientation birefringence of the imide resin ranges from $-0.1\times10^{-3}$ to $0.1\times10^{-3}$.

**53.** The imidized methacrylic resin composition as set forth in claim 51, wherein a glass transition temperature of the imide resin is not less than 120°C.

**54.** A molded product, comprising the imidized methacrylic resin composition as set forth in any one of claims 51 to 53.

**55.** A film, being obtained by molding the imidized methacrylic resin composition as set forth in any one of claims 51 to 53.

**56.** A laminate, being obtained by laminating the film as set forth in claim 55 on metal or plastic.

[Fig1]

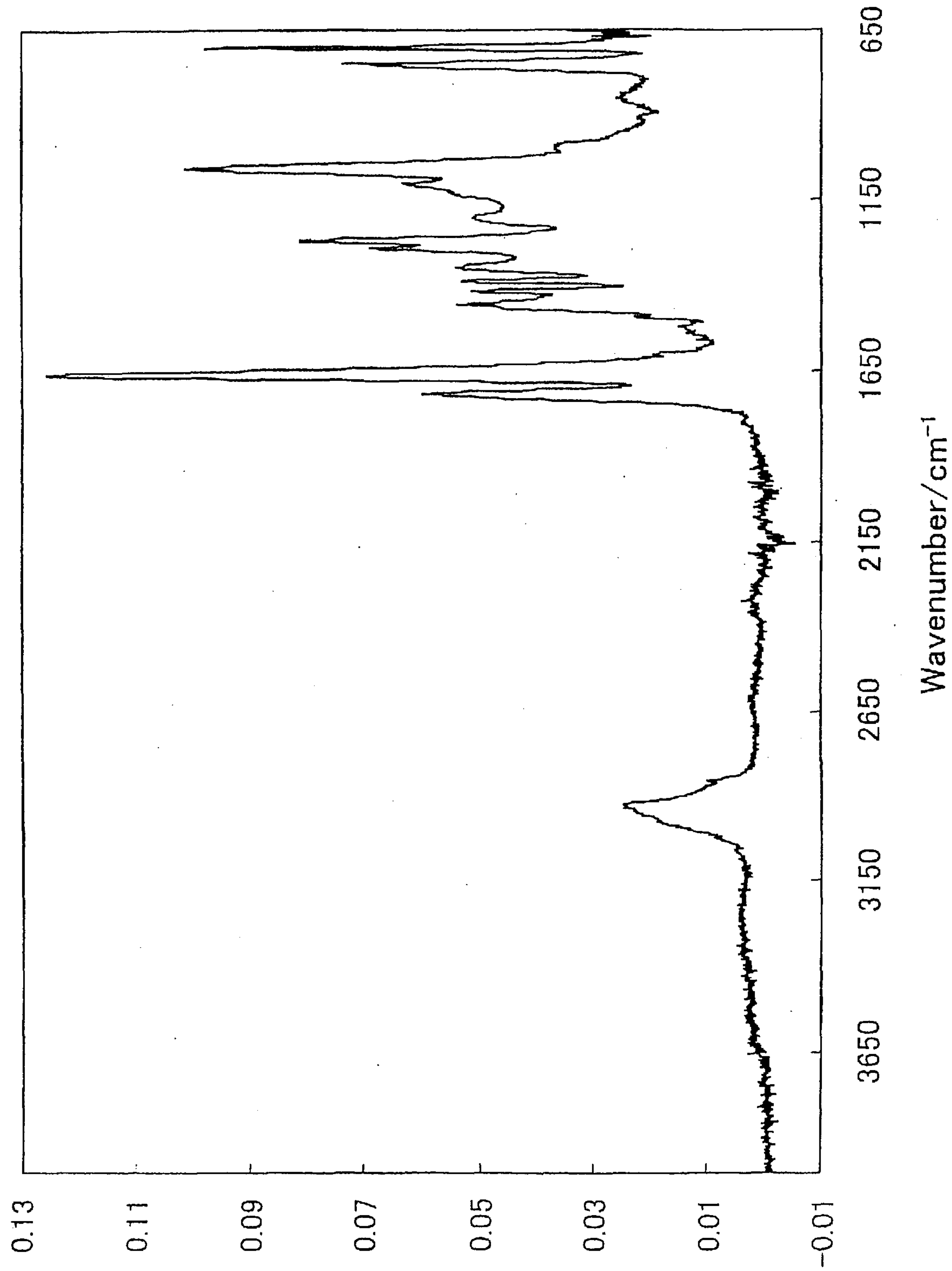
Wavenumber/cm-1
650
1150
1650
2150
2650
3150
3650
0.13
0.11
0.09
0.07
0.05
0.03
0.01
-0.01

[Fig 2]

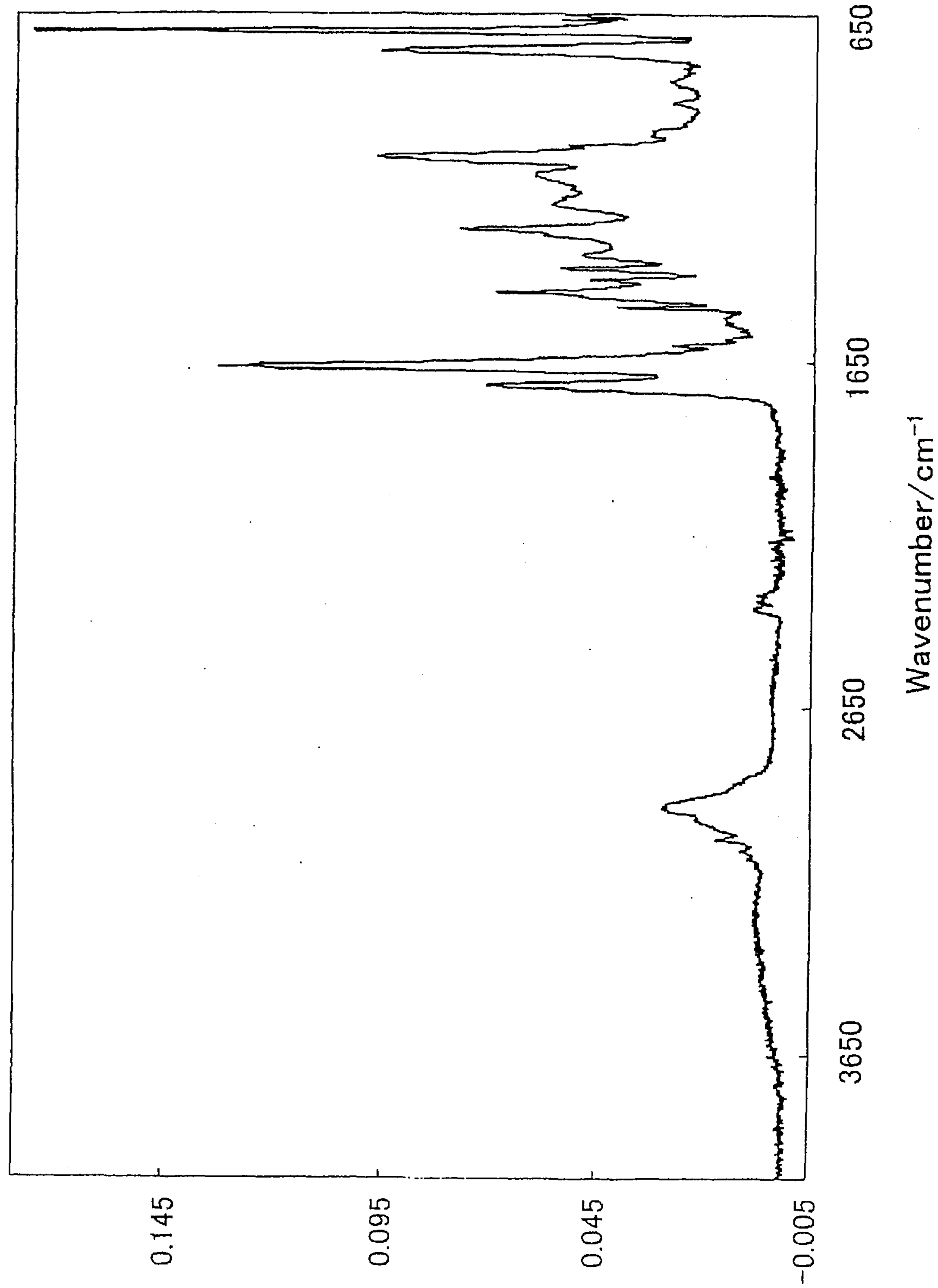

[Fig.3]

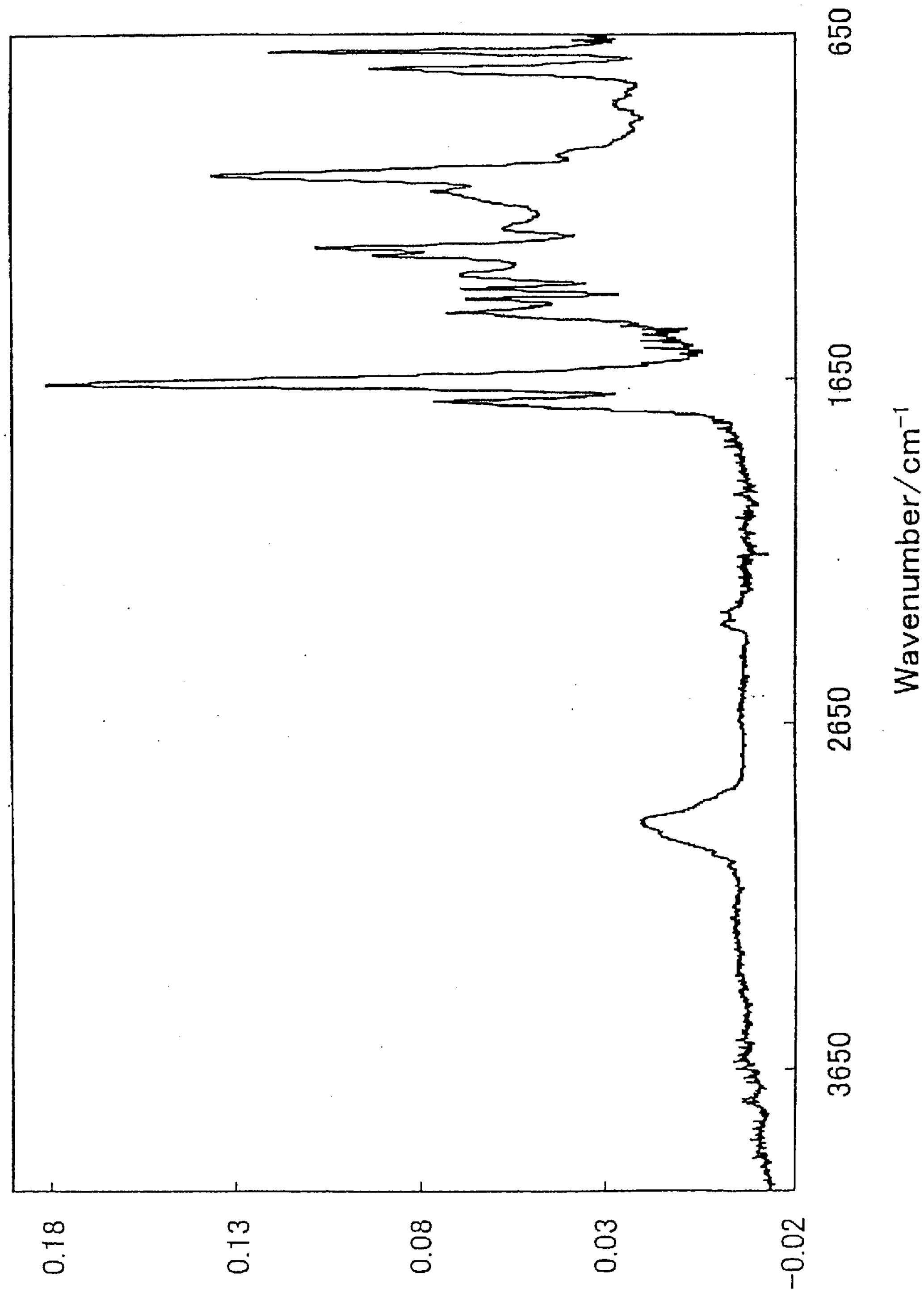

## INTERNATIONAL SEARCH REPORT

International application No.
PCT/JP2004/017878

A. CLASSIFICATION OF SUBJECT MATTER
Int.Cl[7] C08F8/48, C08F212/08, C08F220/10, C08F265/06, G02B5/30

According to International Patent Classification (IPC) or to both national classification and IPC

B. FIELDS SEARCHED

Minimum documentation searched (classification system followed by classification symbols)
Int.Cl[7] C08F8/48, C08F8/30-8/32, C08F212/08, C08F220/10, C08F265/06, G02B5/30

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
WPI(DIALOG), CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 4-356507 A (Mitsubishi Rayon Co., Ltd.), 10 December, 1992 (10.12.92), Claims; Par. Nos. [0008] to [0059]; example 10 & EP 234726 A2 & US 4745159 A | 1-9,18,25, 26-38,48,49 |
| X | JP 62-41205 A (Mitsubishi Rayon Co., Ltd.), 23 February, 1987 (23.02.87), Claims; page 2, upper right column, lines 7 to 13; page 5, lower left column, line 12 to lower right column, line 8; example 11 (Family: none) | 1-9,18,25, 26-38,48,49 |
| X | JP 2-158614 A (Mitsubishi Rayon Co., Ltd.), 19 June, 1990 (19.06.90), Claims; examples 3, 12 & EP 373610 A2 & US 5132371 A | 10-18,25,26, 50 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 January, 2005 (25.01.05) | 08 February, 2005 (08.02.05) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/017878

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-100321 A (Toray Industries, Inc.), 15 April, 1997 (15.04.97), Claims; examples 1, 2 (Family: none) | 1-50 |
| A | US 5094807 A (The Dow Chemical Co.), 10 March, 1992 (10.03.92), Claims; table 1 & WO 92/4386 A1 | 1-50 |
| A | US 4755565 A (E.I.Du Pont de Nemours and Co.), 05 June, 1988 (05.06.88), Claims (Family: none) | 51-56 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4246374 A
- US 4727117 A
- US 4954574 A
- US 5004777 A
- US 5264483 A
- JP 7077608 A
- JP 3220478 B
- JP 6256537 A
- JP 6011615 A
- JP 4361230 A
- US 3284425 A
- JP 2153904 A
- JP 2505970 B
- JP 6166714 A